(19) Europäisches Patentamt

European Patent Office

Office européen des brevets

(11) EP 1 624 219 A1

(12) **EUROPEAN PATENT APPLICATION**

(43) Date of publication:
08.02.2006 Bulletin 2006/06

(51) Int Cl.:
*F16F 3/04* (2006.01)

(21) Application number: 05015401.2

(22) Date of filing: 15.07.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 04.08.2004 US 911197

(71) Applicant: Barnes Group, Inc.
Bristol,
Connecticut 06010-0489 (US)

(72) Inventors:
• Adoline, Jack W.
Toledo
Ohio 43611 (US)
• Fondren, Bruce J.
Ida
Michigan 48140 (US)

(74) Representative: Schumacher, Horst
Grosse Bockhorni Schumacher
Patent- und Rechtsanwälte
Frühlingstrasse 43A
45133 Essen (DE)

(54) **Non-linear spring system**

(57) A spring system for relatively displacing elements attached to end mounts of the rod assembly comprises a housing having a rod member movable between extended and retracted positions relative thereto, and a first spring in the housing surrounded by a second spring for biasing the rod member to one of an extended or retracted position relative to the housing. The two springs exert a non-linear load versus deflection curve as the rod member moves between an extended position and a retracted position.

FIG. 4

## Description

The present invention relates to spring systems, and more particularly to a spring and rod assembly having a non-linear load.

## INCORPORATION BY REFERENCE

Incorporated herein by reference is Assignee's United States Patent Application Serial Nos. 10/056,941 filed January 28, 2002 and 10/820,280 filed April 8, 2004.

## BACKGROUND OF THE INVENTION

The present invention relates to spring systems such as a spring and rod assembly that exerts a compressive force and/or expansional force which increases at a non-linear rate. The spring systems embodying the present invention are useful in motor vehicles for easing the opening of closure members such as luggage compartment lids, engine compartment lids, hatchbacks, doors, etc; however, the spring systems can be used in many other applications (e.g., garage door assemblies, hatch or lid assemblies, etc.).

Spring systems are used in various applications, for example, to assist in lifting, opening, and damping applications. Typical applications include lifting a lid hinged to a stationary base. Other applications include lifting and/or balancing the hood of a car or trunk or the hatchback of an automobile. Another application of the spring system includes damping the closing of a door hinged to a stationary frame. Many of the struts used are pneumatic or gas springs to assist the opening motion. Many of these types of spring systems contain either gas or hydraulic fluid to control forces and piston speeds. Consequently, because these products contain a gas and/or fluid, they are subject to premature failure, due to the leakage of the gas or fluid over time. The leakage results in a loss of control forces and a subsequent loss of spring life. Two types of prior art gas springs are disclosed in United States Patent Nos. 5,887,857 and 6,179,099, both of which are incorporated herein by reference.

In an effort to overcome the past deficiencies of springs, a spring system having multiple springs was developed as disclosed in United States Patent Application Serial No. 10/056,941 filed January 28, 2002, which is incorporated herein by reference. The spring system was designed so as to produce a linear load versus deflection curve. Although the spring system is a significant improvement over past spring configurations, the rate at which the spring system was compressed or expanded was essentially dependent on the load applied to the spring system. In some applications, the rate at which a spring system is compressed or expanded may need to be altered in certain applications to inhibit or prevent overly rapid compression or expansion of the spring system. In order to address this problem, a spring system having multiple springs and a fluid control valve system was developed as disclosed in United States Patent Application Serial No. 10/820,280 filed April 8, 2004, which is incorporated herein by reference. In this spring system, the rate at which the spring system is compressed or expanded can be at least partially controlled by the flow rate of a fluid out of the housing of the spring system and/or between chambers in the housing of the spring system.

Although the spring systems disclosed in Application Serial Nos. 10/056,941 filed January 28, 2002 and 10/820,280 filed April 8, 2004 provide excellent linear expansion and/or compression rates, there remain situations in which a non-linear expansion and/or compression rate is needed. One example is a truck hood. When the hood is initially lifted from the closed position, the full weight of the hood must be countered to lift the hood. As the hood is further lifted, the hood approaches a balanced point wherein very little force is needed to move the hood. Another example is a hatch on a military vessel that opens by lifting the hatch. When the hatch is initially lifted from the closed position, the full weight of the hatch must be countered to lift the hatch. As the hatch is further lifted, the hatch approaches a balanced point wherein very little force is needed to move the hatch. In both of these examples, a non-linear rate of expansion and/or compression of a spring system is desirable.

In view of the present state of the art, there remains need for a spring system that provides a non-linear rate of compression and/or expansion.

## SUMMARY OF THE INVENTION

The present invention provides an improved spring system which overcomes the above referred-to difficulties and others with regard to spring systems heretofore available. The spring system in accordance with the invention is particularly adapted for lifting or pivoting one component relative to another component at a controlled rate. In accordance with one embodiment of the invention, the spring system provides a lift mechanism for hinged covers, hatches and the like. In accordance with another and/or alternative embodiment of the invention, the spring system provides a lift mechanism for a vehicle hood. In accordance with still another and/or alternative embodiment of the invention, the spring system applies a non-linear force during the expansion and/or compression of the spring system. In accordance with yet another and/or alternative embodiment of the invention, the spring system is able to support significant loads while maintaining strength over a greater number of operating cycles. In accordance with still yet another and/or alternative embodiment of the invention, the spring system provides a mechanical assembly that can yield controllable forces over a long period of use and control the spring forces during extension and/or compression of the spring system. In accordance with a further and/or alternative embodiment of the invention, the one or more springs control the rate at which the spring system expands and/or contracts.

In accordance with one aspect of the present invention, the spring system includes a plurality of springs. The springs typically build potential force as the springs are compressed and release force when the springs are expanded. In one embodiment of the invention, the spring system includes at least two springs. In one aspect of this embodiment, the spring system includes two springs. In another and/or alternative aspect of this embodiment, the spring system includes three springs. In still another and/or alternative aspect of this embodiment, the spring system includes four springs. In yet another and/or alternative aspect of this embodiment, the spring system includes five springs. In another and/or alterative embodiment of the invention, the compression of the plurality of springs at different points during the compression of the spring system produces a non-linear load versus deflection curve during the compression of the spring system. In still another and/or alterative embodiment of the invention, the expansion of the plurality of springs at different points during the expansion of the spring system produces a non-linear load versus deflection curve during the expansion of the spring system. In yet another and/or alternative embodiment of the invention, a plurality of the springs have a different load versus deflection curve. In still yet another and/or alternative embodiment of the invention, a plurality of the springs have a similar load versus deflection curve. In a further and/or alternative embodiment of the invention, a plurality of the springs have different lengths. In a still a further and/or alternative embodiment of the invention, a plurality of the springs have a different spring rate. In a yet a further and/or alternative embodiment of the invention, a plurality of the springs have a similar spring rate. In a still yet a further and/or alternative embodiment of the invention, a plurality of the springs are formed from differing wire thickness and/or different materials. In another and/or alternative embodiment of the invention, a plurality of the springs are formed from a similar wire thickness and/or similar materials. In one non-limiting design, one or more of the springs are made of music wire (ASTM A228) and/or 302 stainless steel. As can be appreciated, other materials can be used to form one or more springs such as, but not limited to, other metals, plastic materials and/or composite materials. As can be appreciated, the particular thickness of the wire used for each of the springs, the particular material used for the springs, the inner and outer diameter of the each of the springs, the number of windings of each spring, the number of springs used in the spring system, the length of each of the springs, the manner in which the springs are oriented with respect to one another, the spring rate of each of the springs, and other factors will be in part dependent on the function and end use of the spring system. The particular type of spring and the physical properties of the springs are selected in a spring system to produce a load verses deflection curve that matches a particular application for the spring system.

In accordance with another and/or alternative aspect of the present invention, the spring system includes a plurality of springs wherein a plurality of the springs are wound in differing directions with respect to another spring. The differing direction of winding of a plurality of the springs facilitates in packaging the multiple springs in a housing. The differing direction of winding of a plurality of the springs also facilitates in allowing for proper compression and/or expansion of the two or more springs in a housing.

In accordance with still another and/or alternative aspect of the present invention, the spring system includes at least one spring guide to reduce the incidence of spring buckling during the operation of the spring assembly. Spring buckling typically occurs when the springs are being compressed. The spring guide is designed to inhibit or prevent such buckling during the operation of the spring assembly. The spring guide can also or alternatively be designed to control and/or limit the movement of the springs to thereby inhibit or prevent the springs becoming tangled within the housing of the spring system, thus resulting in the impairment of the operation of the spring system. The spring guide can also or alternatively be designed to control and/or limit the movement of the springs reduce or prevent reorientation of two or more springs with respect to one another which reorientation adversely affects the operation of the spring system. In one embodiment of the invention, at least one spring guide is designed to move in the housing of the spring system and to at least partially extend into the interior of the spring along the longitudinal axis of the spring. For instance, a spring in the form of a coil has an inner void region that is substantially cylindrically shaped. The spring guide for such a spring is shaped and sized to be inserted into this void inner region. In one non-limiting design, the spring guide has a maximum cross-sectional length that is less than the diameter of the substantially cylindrically shaped void inner region of the spring. In another and/or alternative non-limiting design, the spring guide has a substantially circular cross-sectional shape. As can be appreciated, the cross-sectional shape of the spring guide can have other shapes. The spring guide can be designed to fully or partially extend the full longitudinal length of the spring when the spring is in a compressed position in the housing of the spring system. In another and/or alternative embodiment of the invention, at least one spring guide is positioned in a substantially fixed position at an interior end of the housing of the spring system. In one aspect of this embodiment, the spring guide is an end plug that is shaped and sized to be inserted into the void inner region of at least one of the springs. In one non-limiting design, the spring guide is designed to fully or partially extend the full longitudinal length of the spring when the spring is in a compressed position in the housing of the spring system. In still another and/or alternative embodiment of the invention, the spring guide at least partially functions as a stop to limit the amount of compression of one or more springs in the spring system. The length of the spring guide can be selected to at least partially set the fully compressed position of the spring system. In this arrangement, the spring guide can be used to prevent or inhibit over compression of one or more springs in the spring system and thereby extend the life of the spring system and/or maintain the proper operating conditions of the spring system. In one aspect of this embodiment, the spring guide can function as a damper to inhibit or prevent damage to the components of ths spring system during rapid compression of the spring system. In one non-limiting design, the end of the spring guide can include a compressible or semi-compressible end to absorb force upon contact via compression.

In accordance with still another and/or alternative aspect of the present invention, the spring system includes a spring rod which is adapted to extend and retract relative to a housing. The extension of the springs imparts a force to the parts connected to the ends of the rod and housing and, advantageously, multiple end configurations can be used to adapt the spring rod to a variety of mounting applications. The encased springs minimize load losses over time. In one embodiment of the invention, the housing has an internal chamber that is design to encase the one or more springs of the spring system. Typically the shape of the internal chamber is similar in shape to the shape of one or more springs; however, this is not required. The cross-sectional shape and size of the internal chamber is selected to enable the one or more springs to be compressed and uncompressed during the operation of the spring system. The cross-sectional shape and size of the internal chamber can also be selected so as to inhibit or prevent buckling of one or more springs during compression or uncompression of the one or more springs. In one non-limiting design, the housing has a generally cylindrically shaped internal chamber. In another and/or alternative embodiment of the invention, the exterior shape of the housing is selected for a particular application and/or look. In one non-limiting design, the exterior shape of the housing is generally cylindrical. In still another and/or alternative embodiment of the invention, the housing is made of a resilient material. The material of the housing must be durable enough to maintain the one or more springs in the internal chamber of the housing during multiple compressions and uncompressions of the one or more springs. The exterior portion of the housing must also be durable enough to withstand the operating environment of the spring system. Typically the housing is made of a metal material and/or a plastic material; however, other materials can be used. As can be appreciated, the external surface of the housing can include a protective coating (e.g., polymer coating, paint, etc.) to inhibit or prevent corrosion, scratches and/or other types of damage to the housing. In still another and/or alternative embodiment of the invention, the housing includes an end connector connected to one end of the housing. The end connector is designed to connect one end of the housing to a structure that incorporates the use of the spring system. In one aspect of this embodiment, the end connector is interchangeable with another type of end connector to enable the end of the housing to be connected to variety of structures in a variety of ways. In yet another and/or alternative embodiment of the invention, the housing includes one or more closure connectors that are used to facilitate in maintaining the internal components of the spring system within the internal chamber of the housing. The one or more closure connectors can be designed to be removable to allow for maintenance and/or repair of one or more components in the internal chamber of the spring system. In such a design, the one or more closure connectors can include, but are not limited to, set screws, clamps, etc. Alternatively, the one or more closure connectors can be designed to be unremovable. In such a design, the one or more closure connectors can include, but are not limited to, rivets, weld, indents, etc. In still yet another and/or alternative embodiment of the invention, the spring rod has a cross-sectional size and shape to enable the spring rod to move within the internal chamber of the housing. In one non-limiting design, the spring rod has a generally cylindrically shaped body having a diameter that is less than the diameter of a generally cylindrically shaped internal chamber of the housing. In a further and/or alternative embodiment of the invention, the spring rod is formed of a resilient and durable material to enable the spring rod to operate without failure during the selected life of the spring system. The spring rod can be solid, or include one or more hollow inner chambers. The spring rod can have a uniform or non-uniform outer shape. In one non-limiting design, the spring rod includes a generally solid body having a generally cylindrical shape and formed of a metal and/or plastic material. As can be appreciated, the external surface of the spring rod can include a protective coating (e.g., polymer coating, paint, etc.) to inhibit or prevent corrosion, scratches and/or other types of damage to the housing. Additionally or alternatively, the external surface of the housing can include a lubricative coating (e.g., Teflon and/or other polymer coating, etc.) to facilitate in the movement of the spring rod in the internal chamber of the housing. As can be further appreciated, a lubricant (e.g., oil, grease, silicon, etc.) can be inserted in the internal chamber of the housing to facilitate in the movement of the spring rod in the internal chamber of the housing. In a further and/or alternative embodiment of the invention, the spring rod includes a top end fastener adapted to be connected to a top connector. The top connector is designed to connect one end of the spring rod to a structure that incorporates the use of the spring system. In one aspect of this embodiment, the top connector is interchangeable with another type of top connector to enable the end of the spring rod to be connected to variety of structures in a variety of ways. The top end fastener of the spring rod can be designed to be permanently connected or removably connected to the top connector. In one non-limiting design, the top end fastener includes a threaded section that enables a top connector be to removably connected to the top end fastener.

In accordance with still another and/or alternative aspect of the present invention, the spring system includes one or more rod guides that at least partially guide the movement of the spring rod within the internal chamber of the housing. The one or more rod guides are designed to prevent or inhibit side loading of one or more of the springs during the compression or uncompression of one or more of the springs. In one embodiment of the invention, one end of spring rod is directed connected or interconnected to a rod guide. In another and/or alternative embodiment of the invention, both ends of the spring rod are directly connected or interconnected to the rod guide. In still another and/or alternative embodiment of the invention, the body of the spring rod includes one or more rod guides. In yet another and/or alternative embodiment of the invention, at least one rod guide has a cross-sectional shape and size that closely matches the cross-sectional shape and size of the internal chamber of the housing. In one non-limiting example, the cylindrically shaped internal chamber has a diameter X and at least a portion of the rod guide has a circular cross-sectional shape that is the same as or slightly less than X. In this non-limiting design, the thickness of the circular cross-sectional shape is sufficient to maintain the rod guide in a proper orientation in the internal chamber of the housing as the spring rod moves within the internal chamber. This thickness is more important when the rod guide moves with the spring rod in the internal chamber. In still yet another and/or alternative embodiment of the invention, at least one rod guide has an upper and lower surface wherein the upper surface is directly connected or interconnected to the spring rod and the lower surface directly or indirectly engages one or more springs. In a further and/or alternative embodiment of the invention, at least one rod guide has an upper and lower surface wherein the upper surface is directly connected or interconnected to the spring rod and the lower surface directly connects or interconnects with at least one spring guide. In a still further and/or alternative embodiment of the invention, at least one rod guide includes a stop surface adapted to directly or indirectly engage a portion of the housing or a component in the internal chamber of the housing to thereby prevent further movement of the rod guide as the rod guide moves with the spring rod to an extended position. The stop surface thus defines the fully extended position of the spring rod. In one aspect of this embodiment, the stop surface includes a compressible material that at least partially absorbs a force as the stop surface directly or indirectly engages a portion of the housing or a component in the internal chamber of the housing. One non-limiting material is a rubber material; however, other materials can be used. As can be appreciated, the stop surface need not include a compressible material. If a damping effect is desired or required prior to the stop surface directly or indirectly engage a portion of the housing or a component in the internal chamber of the housing, a spring and/or other compressible material can be placed between the stop surface and the end of the housing. In a still yet further and/or alternative embodiment of the invention, at least one rod guide is made of a durable and resilient material. Such materials include, but are not limited to, plastic, metal, rubber and the like.

In accordance with still another and/or alternative aspect of the present invention, the spring system includes a fluid control system within the internal chamber of the housing that is designed to at least partially control the rate of the spring rod moving between an extended and nonextended position and/or an nonextended to extended position. In this aspect of the present invention, the flow of a fluid in the internal chamber of the housing is controlled to in part control the speed of uncompression of the one or more springs during extension of the spring system. The fluid can be a gas and/or a liquid. In one non-limiting design, the fluid is a gas (e.g., nitrogen, air, inert gas, etc.). Typically the selected fluid does not adversely affect the internal components of the spring system. In one embodiment of the invention, the internal chamber of the housing is divided into at least two sub-chambers by at least one movable component of the spring system. The movable component is designed to at least partially regulate the flow of fluid between at least two of the sub-chambers. This regulation of fluid flow at least partially controls the speed of uncompression of the one or more springs during extension of the spring system. In one aspect of this embodiment, the movable component includes a rod guide. In one non-limiting design of this aspect, the rod guide is directly or indirectly connected to one end of a spring rod and moves within the internal chamber as the spring rod moves between an extended and nonextended position. As such, the rod guide simulates a piston in the internal chamber of the housing. In another and/or alternative aspect of this embodiment, the movable component includes a valve system that at least partially regulates the flow of fluid between two ends of the movable component. In another and/or alternative embodiment of the invention, the housing of the spring system includes one or more seals to control the fluid flow into and/or out of the internal chamber of the housing. In one aspect of this embodiment, one or both ends of the housing include a sealing system to inhibit or prevent fluid from flowing into and/or out of the internal chamber of the housing. In another and/or alternative aspect of this embodiment, the housing includes one or more openings to allow fluid to enter and/or exit the internal chamber of the housing.

In accordance with yet another and/or alternative aspect of the present invention, the fluid control system within the internal chamber of the housing regulates fluid between at least two sub-chambers and substantially prevents fluid from flowing into or out of the internal chamber. In this arrangement, a seal is positioned about the spring rod at the end of the housing from which the spring rod extends. The seal is designed to inhibit or prevent fluid flowing into or out of the internal chamber of the housing when the spring rod moves between an extended and nonextended position. One or more seals such as, but not limited to, sealing rings can be used to seal the end of the housing. The movable component includes a valve system to at least partially regulate the flow of fluid between at least two sub-chambers as the movable component and spring rod move within the internal chamber. In one embodiment, the movable component includes a seal about the outer perimeter of the movable component to inhibit or prevent fluid from flowing about the outer perimeter of the movable component as the movable component moves within the internal chamber. In another and/or alternative embodiment, the movable component includes one or more openings about the outer perimeter of the movable component to allow fluid to flow about the outer perimeter of the movable component as the movable component moves within the internal chamber. In still another and/or alternative embodiment, the movable component includes one or more openings spaced from the peripheral edge of the movable component to allow fluid to flow through the movable component as the movable component moves within the internal chamber. In one aspect of this embodiment, the movable component includes at least two openings spaced from the peripheral edge of the movable component. In one non-limiting design, one opening allows for a greater fluid flow rate through the opening than one other opening. In another and/or alternative non-limiting design, at least two openings allow for substantially the same fluid flow rate through the two openings. In another and/or alternative aspect of this embodiment, at least one of the openings includes a one way valve to allow fluid to flow in one direction and to inhibit or prevent fluid flow in an opposite direction. In one non-limiting design, the one way valve inhibits or prevents fluid flow through the valve as the spring rod moves to an extended position and the one or more springs become uncompressed. In such a design, the one way valve can cause the rate of movement of the spring rod to the extended position to slow. In another and/or alternative non-limiting design, the one way valve allows fluid flow through the valve as the spring rod moves to a nonextended position and the one or more springs become compressed. In such a design, the one way valve allows the rate of movement of the spring rod to the nonextended position to be faster than in the opposite direction. As can be appreciated, as the spring rod moves to the nonextended position, the one or more springs are compressed thereby resisting movement of the spring rod to a nonextended position and thereby slowing the movement of the spring rod to such position.

In accordance with still yet another and/or alternative aspect of the present invention, the fluid control system within the internal chamber of the housing regulates fluid between at least one sub-chamber and allows fluid to flow into and/or out of the internal chamber. In this arrangement, the movable component includes a valve system to at least partially regulate the flow of fluid between at least two sub-chambers as the movable component and spring rod move within the internal chamber. In one embodiment, the movable component includes a seal about the outer perimeter of the movable component to inhibit or prevent fluid from flowing about the outer perimeter of the movable component as the movable component moves within the internal chamber. In still another and/or alternative embodiment, the movable component includes one or more openings spaced from the peripheral edge of the movable component to allow fluid to flow through the movable component as the movable component moves within the internal chamber. In one aspect of this embodiment, at least one of the openings includes a one way valve to allow fluid to flow in one direction and to inhibit or prevent fluid flow in an opposite direction. In one non-limiting design, the one way valve inhibits or prevents fluid flow through the valve as the spring rod moves to an extended position and the one or more springs become uncompressed. In such a design, the one way valve can cause the rate of movement of the spring rod to the extended position to slow. In another and/or alternative non-limiting design, the one way valve allows fluid flow through the valve as the spring rod moves to a nonextended position and the one or more springs become compressed. In such a design, the one way valve allows the rate of movement of the spring rod to the nonextended position to be faster than in the opposite direction. As can be appreciated, as the spring rod moves to the nonextended position, the one or more springs are compressed thereby resisting movement of the spring rod to a nonextended position and thereby slowing the movement of the spring rod to such position. In still another and/or alternative embodiment of the invention, fluid is allowed to flow into and/or out of a sub-chamber by flowing about the spring rod in the region where the spring rod passes through an end of the housing. The size of the opening about the spring rod is selected to allow for a certain fluid flow rate out of an upper sub-chamber as the spring rod moves to an extended position. In one non-limiting design, the upper chamber is formed between the movable component and the end of the housing through which the spring rod passes. As the spring rod moves to an extended position, the upper sub-chamber reduces in size and causes the fluid in the chamber to be forced out through the opening about the spring rod. The fluid is not allowed to flow in a lower sub-chamber due to the one way valve in the movable component. The low rate of the fluid through the opening about the spring rod at least partially controls the rate at which the spring rod moves to an extended position. As such, a smaller opening will reduce the rate of movement and a larger opening will allow for a faster rate of movement. In yet another and/or alternative embodiment of the invention, fluid is allowed to flow into and/or out of a sub-chamber by flowing through one or more openings in the housing. The size of the one or more openings in the housing is selected to allow for a certain fluid flow rate out of an upper sub-chamber as the spring rod moves to an extended position. In one non-limiting design, the upper chamber is formed between the movable component and the end of the housing through which the spring rod passes. As the spring rod moves to an extended position, the upper sub-chamber reduces in size and causes the fluid in the chamber to be forced out through the one or more openings in the housing. The fluid is not allowed to flow in a lower sub-chamber due to the one way valve in the movable component. The low rate of the fluid through the one or more openings in the housing at least partially controls the rate at which the spring rod moves to an extended position. As such, a smaller opening will reduce the rate of movement and a larger opening will allow for a faster rate of movement.

In accordance with a further and/or alternative aspect of the present invention, a spring system in accordance with the invention is particularly adapted for lifting or pivoting one component relative to another component at a controlled rate. In accordance with one embodiment of the invention, a lift mechanism for hinged covers and the like operates automatically upon release of the cover, or a lift mechanism for a loaded platform wherein the platform is elevated, progressively, as the load thereon is reduced. Advantageously, the spring assembly applies a non-constant and controlled force to open the cover or lift the platform. The mechanism is able to support significant loads while maintaining strength over a greater number of operating cycles than existing pneumatic or gas spring designs. In accordance with another and/or alternative embodiment of the invention, a purely mechanical assembly that can yield controllable forces over a long period of use and control the spring forces during both extension and compression is used.

In accordance with a still further and/or alternative aspect of the present invention, a spring system is comprised of multiple springs. The spring system includes a rod which is adapted to extend and retract relative to a housing. In embodiment of the invention, the springs will build potential force as the springs are compressed, and release that force once the springs are allowed to expand. This extension of the springs imparts a force to the parts connected to the ends of the rod and housing and, advantageously, multiple end configurations can be used to adapt the spring rod to a variety of mounting applications. The springs of a spring rod according to the invention are interrelated to produce a non-linear load versus deflection curve when the spring system extends and/or contracts. The encased springs minimize load losses over time, and the mechanism does not contain any fluid or gases within the lift body. This advantageously eliminates the inevitable problem of leakage and subsequent loss of utility.

It is accordingly an outstanding object of the present invention to provide an improved spring system for exerting an operating force on a displaceable member at a controlled rate.

Another and/or alternative object of the present invention is the provision of a spring system that supplies a consistent force over an extended period of time and maintains strength over a greater number of cycles compared to spring systems heretofore available.

Still another and/or alternative object of the present invention is the provision of a spring system having at least two springs interrelated to produce a non-linear load versus deflection curve.

Yet another and/or alternative object of the present invention is the provision of a spring system having at least two springs interrelated to minimize load losses over time.

Still yet another and/or alternative object of the present invention is the provision of a mechanical spring system that provides an operating force that increases at a non-linear rate.

A further and/or alternative object of the present invention is to provide a mechanical spring system that can accommodate, selectively, multiple end configurations, thus adapting the assembly for mounting in a wide variety of use applications.

Still a further and/or alternative object of the present invention is the provision of a mechanical spring system that has a controlled rate of extension from a compressed state.

These and other objects and advantages will become apparent from the following description taken together with the accompanying drawing.

## BRIEF DESCRIPTION OF DRAWINGS

Reference may now be made to the drawings, which illustrate various embodiments that the invention may take in physical form and in certain parts and arrangements of parts wherein;

FIGURE 1 is a perspective view of a lid in the fully open position that is pivotable about a horizontal axis and a spring system in accordance with the present invention connected to the lid;
FIGURE 2 is a perspective view of a lid of FIGURE 1 in the partially closed position;
FIGURE 3 is a perspective view of a lid of FIGURE 1 in the fully closed position;
FIGURE 4 is a longitudinal cross-sectional view of the spring system in accordance with the present invention in the extended position;
FIGURE 5 is a longitudinal cross-sectional view of the spring system in accordance with the present invention in the partially compressed position;
FIGURE 6 is a longitudinal cross-sectional view of the spring system in accordance with the present invention in a more compressed position;
FIGURE 7 is a graph illustrating the relationship between spring force and compression of the spring system of FIGURES 4-6;
FIGURE 8 is a longitudinal cross-sectional view of another spring system in accordance with the present invention in the extended position;
FIGURE 9 is a longitudinal cross-sectional view of the spring system of FIGURE 8 in a compressed position;
FIGURE 10 is a graph illustrating the relationship between spring force and compression of the spring system of FIGURES 8 and 9;
FIGURE 11 is a longitudinal cross-sectional view of another spring system in accordance with the present invention; and,
FIGURE 12 is a longitudinal cross-sectional view of another spring system in accordance with the present invention in the extended position.

## DETAILED DESCRIPTION OF EMBODIMENTS OF THE INVENTION

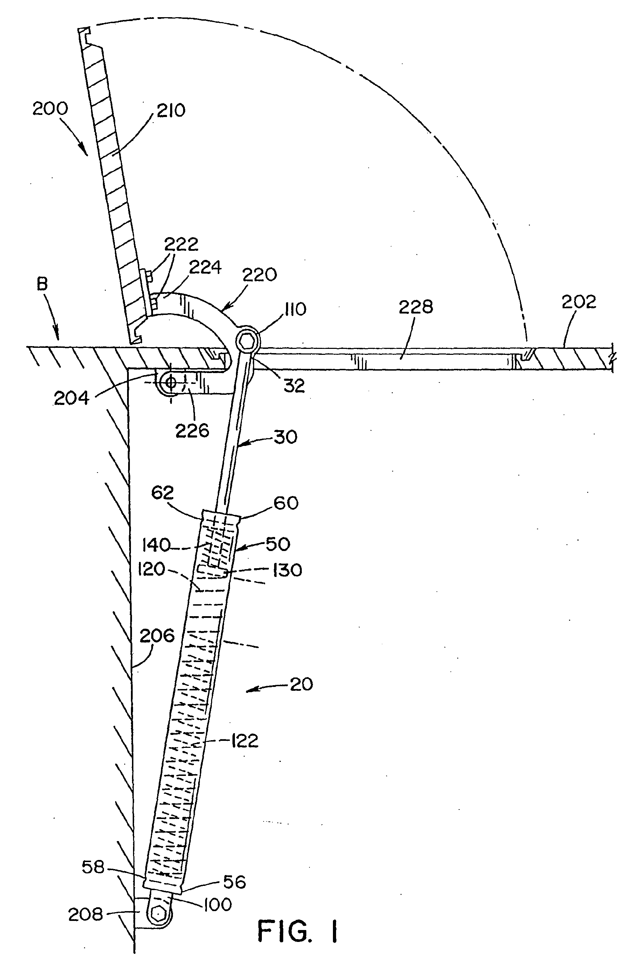

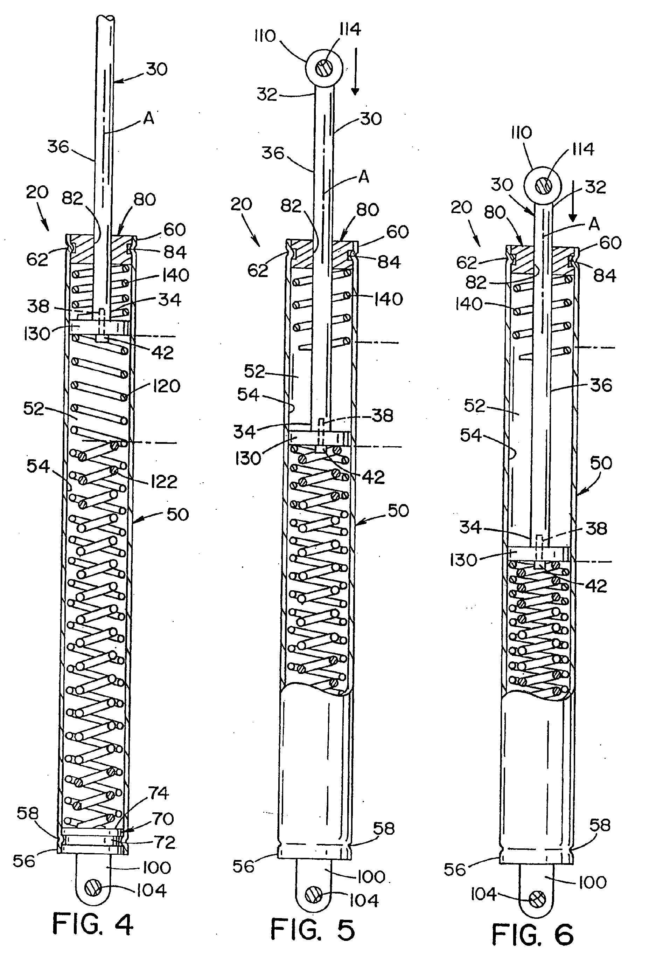

Referring now in greater detail to the drawings, wherein the showings are for the purpose of illustrating various embodiments of the invention only, and not for the purpose of limiting the invention, a spring system 20, in accordance with the invention, as shown in FIGURES 1-6 is set forth. As shown in detail in FIGURES 4-6, the spring system 20 has an axis A and includes a spring rod 30 which is axially extendable and retractable relative to a one-piece tubular housing 50. The housing includes an internal chamber 52 having an inner surface 54, and a mount end 56 and an opposite end 60. Spring rod 30 includes an outer surface 36, an outer end 32, and an inner end 34 having a threaded end cavity 38. Inner end 34 is connected to guide member 130 by a screw 42 which is threaded into threaded end cavity 38.

A first lower spring 120 and a second lower spring 122 are located in internal chamber 52. The two lower springs are oriented such that second lower spring 122 is surrounded by first lower spring 120. The interior surface 54 of internal chamber 52 supports the two lower springs to inhibit or prevent the lower springs from buckling during the compression and expansion of the lower springs.

Positioned at mounting end 56 of housing 50 is a tail bushing 70. Tail bushing 70 includes a spring surface 74 and a lock groove 72. The two lower springs 120 and 122 are axially captured between the spring surface 74 of tail bushing 70 and a guide member 130. Tail bushing 70 is supported in internal chamber 52 of housing 50 by a crimp 58 on the mount end which forms a radially inwardly crimp that engages the lock groove 72 as shown in FIGURE 4. Tail bushing 70 is made of a resilient material to withstand the compressive forces of the two lower springs. The tail bushing can also be made of a material that forms a seal in the mount end of the housing to inhibit or prevent fluid from entering or exiting the internal chamber; however, this is not required. As can be appreciated, the tail bushing can include one or more seals, not shown, to facilitate in sealing the mount end of the housing.

An upper spring 140 is also located in internal chamber 52. The upper spring is axially captured between guide member 130 and a top bushing 80. The upper spring is positioned about spring rod 30. The spring rod facilitates in inhibiting the buckling of the upper spring during compression of the upper spring.

Spring system 20 typically includes the use of a one-piece housing 50 so as to facilitate in the smooth movement of rod 30 and springs 120 and 122 during operation of the spring system; however, this is not required. Although not shown, tail bushing 70 can include a neck portion having a diameter sized to be received in the interior of spring 122. This neck portion can be used to facilitate in positioning spring 122 relative to spring 120. Connected to tail bushing 70 is a mounting element 100. The mounting element can be formed as part of the tail bushing or be connected to the tail bushing such as by a threaded screw connection or other type of connection.

Positioned in the open end of outer end 60 of housing 50 is a top bushing 80 having a central opening 82. The central opening is sized to allow spring rod 30 to pass therethrough. Bushing 80 includes a locking groove 84 that is used to secure bushing 80 to housing 50. Outer end 60 of housing 50 includes a crimp 62 that forms a radially inwardly crimp which engages the locking groove 82. Spring rod 30 is slidably supported at outer end 60 of housing 50 by top bushing 80 as the spring rod passes through opening 82. The top bushing, in conjunction with rod guide member 130, facilitates in guiding the movement of the spring rod in internal chamber 52 thereby inhibiting and/or preventing side loading of the springs. Bushing 80 can include a sealing ring to inhibit or prevent a fluid such as a gas or liquid from flowing between inner surface 54 of internal chamber 52 and the outer surface of bushing 80; however, the use of a sealing ring is not required. Bushing 80 can also include a rod seal to inhibit or prevent a fluid from flowing between outer surface 36 of spring rod 30 and opening 82 in bushing 80; however, the use of a rod seal is not required.

Connected to rod end 32 of spring rod 30 is a mounting element 110. Mounting element 110 can be connected to rod end 32 in a variety of ways (e.g., threaded connection, welded connection, etc.). Mounting elements 100 and 110 have openings 104 and 114 therethrough, respectively, for receiving a variety of different mounting components common in the industry including, but not limited to, pins, bolts, screws, hooks, rings, swivels, and the like. As can be appreciated, one or both of the mounting elements can be designed to be removable so as to be replaced with other types of mounting elements so as to modify the assembly for use in a variety of structural environments; however, this is not required.

Guide member 130 is mounted to spring rod 30 and is slidably positioned in internal chamber 52 of housing 50 as spring rod 30 moves relative to housing 50. Guide member 130 is made of suitable material to facilitate such sliding movement. Lubrication can be provided in internal chamber 52 to facilitate in the sliding movement of guide member 130. As will be appreciated from the foregoing description, guide member 130 and top bushing 80 guide support rod 30 for reciprocation in internal chamber 52 of housing 50 so as to maintain minimal breakaway forces for rod 30. Additionally, guide member 130 and top bushing 80 facilitate in maintaining spring rod 30 coaxial with axis A and decrease the effect of side loading on the springs.

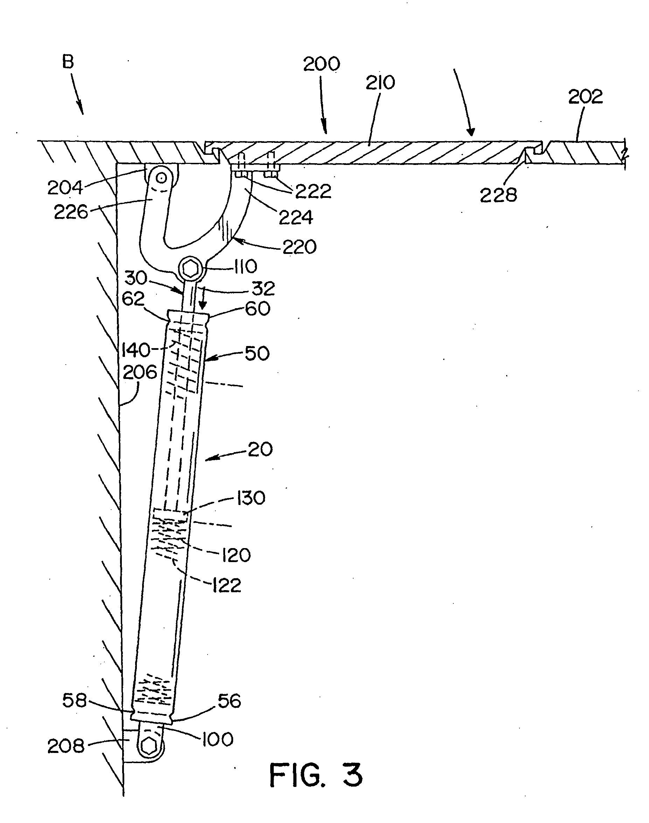

The operation of the spring system will now be described with reference to FIGURES 1-3. As shown in FIGURES 1-3, spring system 20 is illustrated as assisting in the opening and closing of a hatch 200. Hatch 200 includes a lid 210 that is designed to cover an opening 228 in a top surface 202 of structure B as illustrated in FIGURE 3. As can be appreciated, structure A can be representative of a wide variety of structures. In one non-limiting example, structure A can be a receptacle and lid 210 is covers or allows access to opening 228 of the receptacle. Another non-limiting example, structure A is a storage bin and lid 210 is covers or allows access to opening 228 of the storage bin. Still another non-limiting example, structure B is a military vessel and lid 210 is covers or allows access to opening 228 of the military vessel. A further non-limiting example, structure A is a vehicle and lid 210 is a hood that covers or allows access to opening 228 of the engine compartment of the vehicle. As can be appreciated, the spring system of the present invention can be used in a wide variety of other applications.

Referring again to FIGURE 1-3, a hinge 220 is shown to be connected to the base of lid 210. The top end 224 of hinge 220 is shown to be bolted to the inner bottom surface of the lid by a plurality of bolts 222; however, it will be appreciated that the hinge can be connected to the lid in other regions (e.g., outer surface, middle of inner surface, top of inner surface, etc.) and/or in a variety of ways (e.g., weld, adhesive, rivets, screws, etc.). The bottom end 226 of hinge 220 is pivotly connected to a flange 204 on the inner surface of top surface 202 of structure B. The hinge controls the movement of lid 210 when the lid moves between the open and closed position as illustrated in FIGURES 1-3. Spring system 20 is illustrated as being connected to a flange 208 on side wall 206 of structure B and to a mid-portion of hinge 220. The mounting elements 100 and 110 on spring system 20 are pivotly connected to the flange 208 and hinge 220, respectively. These connections are typically designed to allow for essentially free pivotal movement. Spring system 20 is designed to assist in the opening and closing of lid 210. As can be appreciated, more than one spring system can be used to assist in the opening and closing of lid 210. A detailed representation of the spring system for each of the positions illustrated in FIGURES 1-3 is set forth in FIGURES 4-6.

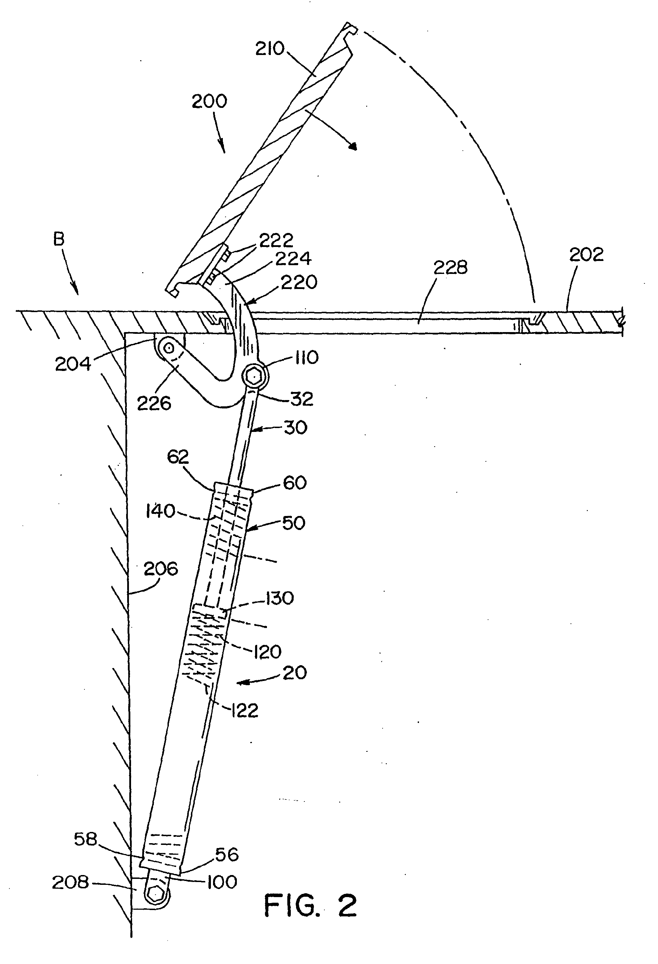

The operation of the of spring system set forth in FIGURE 1-3 will now be described. Referring now to FIGURES 1 and 4, the spring rod of the spring system is positioned in the extended position. In the extended position of the spring rod, lid 210 is positioned in a fully opened or nearly fully opened position. When the spring rod is in the fully extended position, upper spring 140 is compressed between guide member 130 and top bushing 80. The upper spring in the compressed state exerts a downward force on the guide member. As shown in FIGURE 4, lower spring 120 is also in a compressed state between guide member 130 and tail bushing 70. Lower spring 120 in the compressed state exerts an upward force on the guide member. The upward and lower forces exerted on the guide member can be selected for a particular application. As shown in FIGURE 1, lid 210 is slightly off center from the pivot point of the connection between hinge 220 and flange 204. As such, the weight of lid 210 is exerting a force on the spring system to cause the spring rod to move to the extended position. The properties of upper spring 140 can thus be selected to at least partially counter the further movement of the spring rod in the extended position, and to at least partially counter the upward force being applied by lower spring 120. The upper spring can be selected to partially or fully counter upward forces being applied to the guide member and spring rod when the lid is in the open position so that the lid can be easily moved to the point where the lid is centered with the pivot point of the connection between hinge 220 and flange 204. At this point, the lid is essentially balanced and significantly less force is required to move the lid back to the open position or to a more closed position. As the lid is moved to the balance point, the spring rod causes the guide member to move toward the tail bushing 70. Such movement of the guide member causes the upper spring to become less compressed and lower spring to become more compressed. These properties of these two springs can be selected such that the upward and downward forces being applied on the guide member by the two springs as the balance point of the lid is the same or nearly the same. By properly selecting the properties of upper spring 140, the ease of movement of lid 210 from the open position to a partially closed position as illustrated in FIGURE 2 can be increased.

Referring now to FIGURES 2 and 5, lid 210 is illustrated as being in the partially closed position. In this position, spring rod 30 moves downwardly in housing 50. The position of guide member 130 in the internal chamber 52 of housing 50 is such that upper spring is no longer exerting a downward force on the guide member. Upper spring is shown as maintaining contact with top bushing 80. As can be appreciated, upper spring can be alternatively connected to the top surface of the guide member or be allowed to move between the top bushing and guide member when the upper spring is in an uncompressed state. As illustrated in FIGURE 5, the downward force being exerted on the spring rod by the weight of lid 210 as represented by the arrow is at least partially countered by first lower spring 120. The position of the guide member in the internal chamber is such that the bottom surface of the guide member is just making contact with second lower spring 122. As the lid moves farther from the center from the pivot point of the connection between hinge 220 and flange 204, the downward force exerted by the lid on the spring rod increases. The properties of the first lower spring can be selected to partially or fully counter the downward force exerted on the spring rod as the lid moves from the fully balanced point to the position illustrated in FIGURE 2.

Referring now to FIGURES 3 and 6, the lid 210 is shown to be in the fully closed position. Just prior to the lid moving to the fully closed position, much of the weight of the lid exerts a downward force on the spring rod. As shown in FIGURE 6, both the first and second lower springs are in a compressed state and exert a countering upward force on guide member 130. The physical characteristics of the two lower springs can be selected so as to substantially counter the weight of the lid to facilitate in the increasing the ease at which the lid can be controllably opened and closed. The downward force applied by the lid as the lid moves from the position in FIGURE 1 to the position in FIGURE 2 to the position in FIGURE 3 increases at a non-constant rate due the location the spring system is connected to the hinge and also due to the configuration of the hinge. As a result, a spring system having a linear load versus deflection curve would provide not produce a constant counterbalancing force as the lid moves to the closed position. The spring system of illustrated in FIGURES 1-3 has a non-linear load versus deflection curve that can be effectively used in situations wherein the force being applied on the spring system is not generally linear.

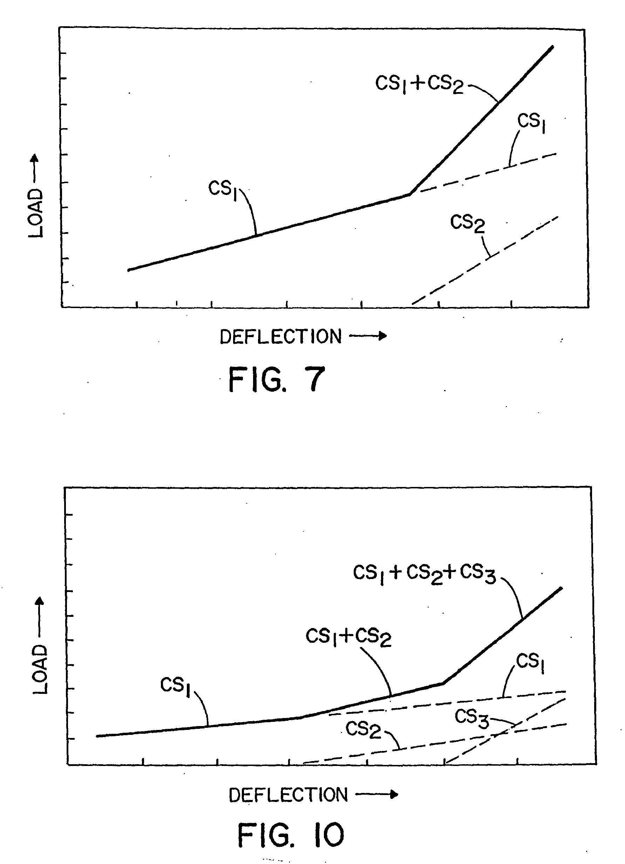

During the compression of the first lower spring 120, the counter force exerted by the spring increases generally linearly. When the guide member moves downwardly in the internal chamber and contacts the second lower spring 122, the second lower spring also begins exerting a counter force on the guide member that increases linearly as the guide member continues to move toward the tail bushing. The additive forces of the two lower springs results in a non-linear load versus deflection curve as illustrated in FIGURE 7. For purposes of illustration of the effects of the two lower springs as the spring rod moves between the extended and retracted positions, the effects of the upper spring are not illustrated in FIGURE 7. As shown in FIGURE 7, as the load on first lower spring 120 increases as the lid moves from the open position to the closed position in FIGURES 1 and 2, the deflection curve for the first lower spring linearly increases as represented by $CS_1$. When the lid is moved to a position such that the guide member begins engaging the second lower spring, the deflection curve for the second lower spring linearly increases as represented by $CS_2$. The addition of the two deflection curves of the two springs is illustrated by the linearly sloping line $CS_1 + CS_2$. As illustrated in FIGURE 7, the engagement of by the guide member with second lower spring 122 results in a non-linearly deflection curve profile of the spring system as the spring rod moves between the fully extended and fully retracted position.

The spring system, through the multiple spring rate characteristics of springs 120 and 122, serves to provide smooth extension forces to the movement of spring rod 30 from a retracted or nonextended position to an extended position. Depending upon the application, the appropriate load versus deflection for the spring system can be determined and the corresponding physical and elastic properties of the combination of springs 120 and 122 can then be ascertained. The springs 120 and 122 can each be fabricated from spring material, such as music wire, and, for example, ASTM A228 or 302 stainless steel. As can be appreciated, other metals, plastic materials and/or composite materials could also be used in certain applications.

Springs 120 and 122 can have the same or different stress and strain characteristics. If the two springs are considered to be a one-dimensional object, the only stress on the springs will be extensional (or compressional, which will be the negative of extensional) and the units of stress will be force per unit of extension. Within a range of compression, each spring obeys "Hook's Law", which states that for forces in a defined range, the stretch of a material is proportional to the applied force:

$$F = -k\Delta L$$

The proportionality constant, k, is known as the spring constant with dimensions of force over length, and $\Delta L$ is the amount of compression. The negative sign indicates that the force is in the opposite direction of extension: if the spring is extended, the force tries to restore it to its original length. Likewise, if the spring is compressed ($\Delta L < 0$), the force attempts to expand the spring, again to its original length. The spring constant depends on both physical and elastic properties of the material being stretched. Hook's Law is fairly intuitive at a basic level, and can be illustrated by everyday experience in which it is known that a thin wire will stretch more than a thick wire or rod of the same material when the same stretching force is applied to both. The formula $U = \frac{1}{2}k(\Delta L)^2$, gives the work of extension (U) or alternatively, the amount of potential energy stored in the spring.

Spring 120 has a free length which is greater than the free length of spring 122, and spring 122 has an outer diameter that is smaller than that of spring 120. The wire diameter of spring 122 is greater than that of spring 120, and the spring rate of spring 122 is greater than that of spring 120 as illustrated by the slopes of $CS_1$ and $CS_2$. As an example of one particular application, the specific physical characteristics of spring 120 are: wire diameter 0.055", inside diameter 0.675 ", outside diameter 0.837", free length 24", and a spring rate of 0.95 lbs./inch; and the physical characteristics of spring 122 are: wire diameter 0.081", inside diameter 0 .544", outside diameter 0.654", free length 10", and a spring rate of 3.37 lbs./inch. As can be appreciated, other combinations can be used with respect to size of springs, diameter of springs, and/or spring rate. For instance, the spring rates of the two springs could be such that lower spring 120 has the largest spring rate and lower spring 122 has the second largest spring rate. As can be appreciated, other combinations can be used with respect to size of springs, diameter of springs, and/or spring rate. Indeed, lower spring 122 can be designed to have the largest inner diameter and lower spring 120 has the smallest outside diameter. The lower springs 120 and 122 are oppositely wound in internal chamber 52; however, this is not required. When the lower springs are oppositely wound, this winding interrelationship together with the dimensional characteristics of the springs produces the combined linear load versus deflection graph as illustrated by the slope of line $CS_1 + CS_2$. A generally linear slope will also be formed when the lower springs are not oppositely wound The different free lengths of springs 120 and 122 is one component that helps to control the forces and stabilize the rod guide member 130 and spring rod 30 during displacement of the spring rod in the internal chamber. In this respect, the longer spring 120 is, in the free state of the spring 120, slightly compressed to the length of the latter spring and, therefore, exerts a stabilizing force on the spring rod and rod guide to thereby reduce or eliminate free play during initial and terminal displacement of the spring rod during use.

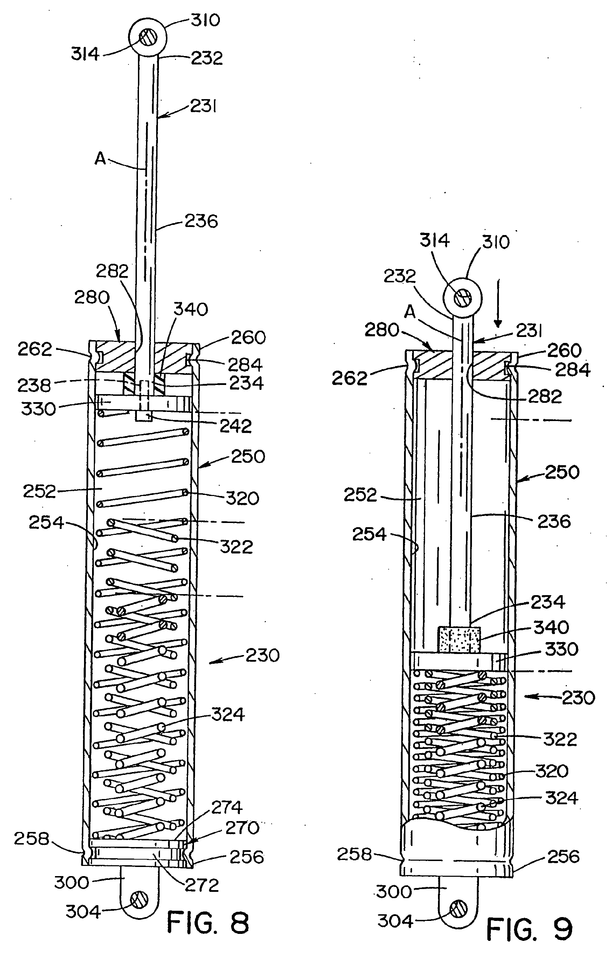

Referring now to FIGURES 8 and 9, another configuration of the spring system of the present invention is illustrated. As shown in FIGURES 8 and 9, the spring system 230 has an axis A and includes a spring rod 231 which is axially extendable and retractable relative to a one-piece tubular housing 250. The housing includes an internal chamber 252 having an inner surface 254, and a mount end 256 and an opposite end 260. Spring rod 231 includes an outer surface 236, an outer end 232, and an inner end 234 having a threaded end cavity 238. Inner end 234 is connected to guide member 330 by a screw 242 which is threaded into threaded end cavity 238.

A first lower spring 320, a second lower spring 322 and a third lower spring 324 are located in internal chamber 252. The three lower springs are oriented such that third lower spring 324 is surrounded by second lower spring 322 and the second lower spring 322 is surrounded by first lower spring 320. The interior surface 254 of internal chamber 252 supports the three lower springs to inhibit or prevent the lower springs from buckling during the compression and expansion of the lower springs.

Positioned at mounting end 256 of housing 250 is a tail bushing 270. Tail bushing 270 includes a spring surface 274 and a lock groove 272. The three lower springs 320, 322 and 324 are axially captured between the spring surface 274 of tail bushing 270 and a guide member 330. Tail bushing 270 is supported in internal chamber 252 of housing 250 by a crimp 258 on the mount end which form a radially inwardly crimp that engages the lock groove 272 as shown in FIGURE 8. Tail bushing 270 is made of a resilient material to withstand the compressive forces of the three lower springs. The tail bushing can also be made of a material that forms a seal in the mount end of the housing to inhibit or prevent fluid from entering or exiting the internal chamber; however, this is not required. As can be appreciated, the tail bushing can include one or more seals, not shown, to facilitate in sealing the mount end of the housing.

An upper stop 340 is also located in internal chamber 252. The upper stop is positioned axially between guide member 330 and a top bushing 280. The upper stop 340 is shown as being connected to the top surface of guide member 330; however, it can be appreciated that the upper stop can be connected to the top bushing 280 or be moveable between the top bushing and the guide member. The upper stop is typically formed of a resilient material that is slightly compressible (e.g. rubber material, plastic, etc.). The upper stop is used to facilitate in protecting the guide member from damage when the spring rod is moved to the fully extended position. As can be appreciated, the upper stop could be substituted for an upper spring, or an upper spring could be used in conjunction with the upper stop.

Spring system 230 typically includes the use of a one-piece housing 250 so as to facilitate in the smooth movement of rod 231 and springs 320, 322 and 324 during operation of the spring system; however, this is not required. Although not shown, tail bushing 270 can include a neck portion having a diameter sized to be received in the interior of spring 322 and/or 324. This neck portion can be used to facilitate in positioning the springs relative to one another. Connected to tail bushing 270 is a mounting element 300. The mounting element can be formed as part of the tail bushing or be connected to the tail bushing such as by a threaded screw connection or other type of connection.

Positioned in the open end of outer end 260 of housing 250 is a top bushing 280 having a central opening 282. The central opening is sized to allow spring rod 231 to pass therethrough. Bushing 280 includes a locking groove 284 that is used to secure bushing 280 to housing 250. Outer end 260 of housing 250 includes a crimp 262 that forms a radially inwardly crimp which engages the locking groove 282. Spring rod 231 is slidably supported at outer end 260 of housing 250 by top bushing 280 as the spring rod passes through opening 282. The top bushing, in conjunction with rod guide member 330, facilitates in guiding the movement of the spring rod in internal chamber 252 thereby inhibiting and/or preventing side loading of the three springs. Bushing 280 can include a sealing ring to inhibit or prevent a fluid such as a gas or liquid from flowing between inner surface 254 of internal chamber 252 and the outer surface of bushing 280; however, the use of a sealing ring is not required. Bushing 280 can also include a rod seal to inhibit or prevent a fluid from flowing between outer surface 236 of spring rod 231 and opening 282 in bushing 280; however, the use of a rod seal is not required.

Connected to rod end 232 of spring rod 231 is a mounting element 310. Mounting element 310 can be connected to rod end 232 in a variety of ways (e.g., threaded connection, welded connection, etc.). Mounting elements 300 and 310 have openings 304 and 314 therethrough, respectively, for receiving a variety of different mounting components common in the industry including, but not limited to, pins, bolts, screws, hooks, rings, swivels, and the like. As can be appreciated, one or both of the mounting elements can be designed to be removable so as to be replaced with other types of mounting elements so as to modify the assembly for use in a variety of structural environments; however, this is not required.

Guide member 330 is mounted to spring rod 231 and is slidably positioned in internal chamber 252 of housing 250 as spring rod 231 moves relative to housing 250. Guide member 330 is made of suitable material to facilitate such sliding movement. Lubrication can be provided in internal chamber 252 to facilitate in the sliding movement of guide member 330. As will be appreciated from the foregoing description, guide member 330 and top bushing 280 guide support rod 231 for reciprocation in internal chamber 252 of housing 250 so as to maintain minimal breakaway forces for rod 231. Additionally, guide member 330 and top bushing 280 facilitate in maintaining spring rod 231 coaxial with axis A and decrease the effect of side loading on the springs.

The operation of the spring system will now be described with reference to FIGURES 8-10. Spring system 230 is illustrated as assisting in the opening and closing of a variety of objects (e.g., lid, vehicle hood, etc.). For instance, spring system 230 could be used to assist in opening and the closing of the lid illustrated in FIGURES 1-3. As illustrated in FIGURE 1, a hinge 220 is shown to be connected to the base of lid 210. The top end 224 of hinge 220 is shown to be bolted to the inner bottom surface of the lid by a plurality of bolts 222. The bottom end 226 of hinge 220 is pivotly connected to a flange 204 on the inner surface of top surface 202 of structure B. The hinge controls the movement of lid 210 when the lid moves between the open and closed position. Spring system 230 could be connected to flange 208 on side wall 206 of structure B and to a mid-portion of hinge 220. The mounting elements 300 and 310 on spring system 230 can be pivotly connected to the flange 208 and hinge 220, respectively. These connections are typically designed to allow for essentially free pivotal movement. As can be appreciated, more than one spring system 230 can be used to assist in the opening and closing of lid 210.

Referring now to FIGURES 1 and 8, the spring rod of spring system 230 is position in the extended position. In the extended position of the spring rod 231, lid 210 is positioned a fully opened or nearly fully opened position. When the spring rod is in the fully extended position, upper stop 340 is compressed between guide member 330 and top bushing 280 thereby prevent further the further extension of spring rod 231. As shown in FIGURE 8, lower spring 320 is also in a compressed state between guide member 330 and tail bushing 270. Lower spring 320 in the compressed state exerts an upward force on the guide member. The upward force exerted on the guide member can be selected for a particular application.

Referring now to FIGURES 3 and 9, lid 210 is illustrated as being in the fully closed position. Just prior to the lid moving to the fully closed position, the much of the weight of the lid exerts a downward force on the spring rod. As shown in FIGURE 9, all three springs are in a compressed state and exert a countering upward force on guide member 330. The physical characteristics of the three lower springs can be selected so as to substantially counter the weight of the lid to facilitate in the increasing the ease at which the lid can be controllably opened and closed. The downward force applied by the lid as the lid moves from position in FIGURE 1 to the position in FIGURE 3 increases at a non-constant rate due to the connection location of the spring system to the hinge and also due to the configuration of the hinge.

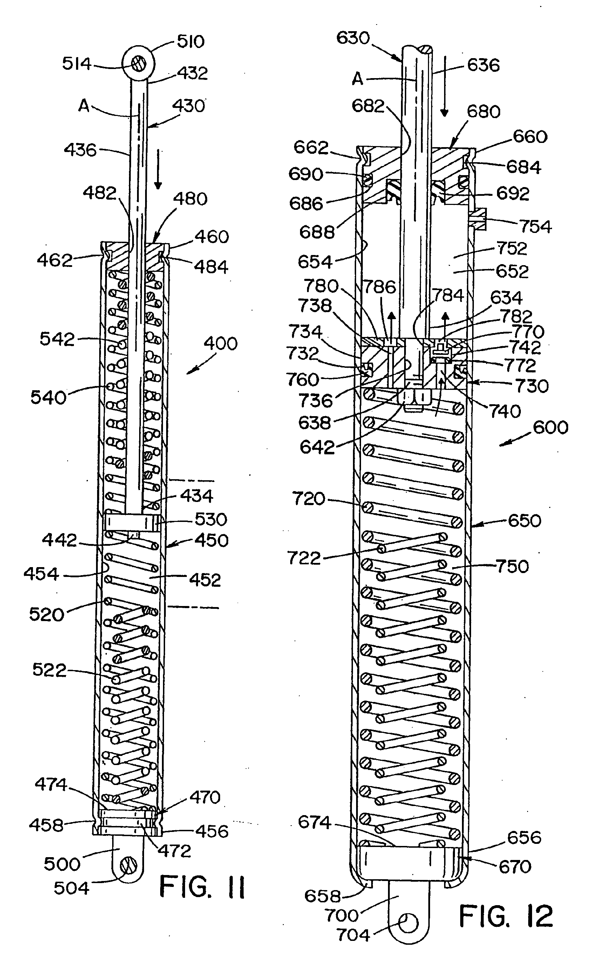

During the compression of the first lower spring 320, the counter force exerted by the spring increases generally linearly. When the guide member moves downwardly in the internal chamber and contacts the second lower spring 322, the second lower spring also begins exerting a counter force on the guide member that increases linearly as the guide member continues to move toward the tail bushing. The additive forces of the two lower springs results in a non-linear load versus deflection curve. When the guide member moves further downwardly in the internal chamber and contacts the third lower spring 324, the third lower spring also begins exerting a counter force on the guide member that increases linearly as the guide member continues to move toward the tail bushing. The additive forces of the two lower springs results in a non-linear load versus deflection curve and the additive forces of the three lower springs also results in a non-linear load versus deflection curve. The non-linear load versus deflection curve of spring system 230 is illustrated in FIGURE 10. As shown in FIGURE 10, as the load on first lower spring 320 increases as the lid moves from the open position to the closed position, the deflection curve for the first lower spring linearly increases as represented by $CS_1$. When the lid is moved to a position such that the guide member begins engaging the second lower spring, the deflection curve for the first lower spring linearly increases as represented by $CS_2$. The addition of the two deflection curves of the two springs is illustrated by the linearly sloping line $CS_1 + CS_2$. When the lid is moved to a position such that the guide member begins engaging the third lower spring, the deflection curve for the third lower spring linearly increases as represented by $CS_3$. The addition of the three deflection curves of the three springs is illustrated by the linearly sloping line $CS_1 + CS_2 + CS_3$. As illustrated in FIGURE 10, the engagement of the guide member with second lower spring 322 results in a non-linearly deflection curve profile of the spring system as the spring rod moves between the fully extended and fully retracted position. In addition, the engagement of the guide member with third lower spring 324 also results in a non-linearly deflection curve profile of the spring system as the spring rod moves between the fully extended and fully retracted position.

The spring system, through the multiple spring rate characteristics of springs 320, 322 and 324, serves to provide smooth extension forces to the movement of spring rod 231 from a retracted or nonextended position to an extended position. Depending upon the application, the appropriate load versus deflection for the spring system can be determined and the corresponding physical and elastic properties of the combination of springs 320, 322 and 324 can then be ascertained. The springs 320, 322, 324 can each be fabricated from spring material, such as music wire, and, for example, ASTM A228 or 302 stainless steel. As can be appreciated, other metals, plastic materials and/or composite materials could also be used in certain applications.

Springs 320, 322 and/or 324 can have the same or different stress and strain characteristics. If the springs are considered to be a one-dimensional object, the only stress will be extensional (or compressional, which will be the negative of extensional) and the units of stress will be force per unit of extension. Within a range of compression, each spring obeys "Hook's Law" as described above.

Spring 320 has a free length which is greater than the free length of springs 322 or 324. Spring 322 has a free length which is greater than the free length of spring 324. Spring 322 has an outer diameter that is smaller than that of spring 320. Spring 324 has an outer diameter that is smaller than that of spring 323. The wire diameter of spring 322 is greater than that of spring 320. The wire diameter of spring 324 is greater than that of spring 322. The spring rate of spring 322 is greater than that of spring 320, and the spring rate of spring 324 is greater than that of spring 322 as illustrated by the slopes of $CS_1$, $CS_2$ and $CS_3$. As one non-limiting example of one particular application, the specific physical characteristics of spring 320 are: wire diameter 0.055", inside diameter 0.675 ", outside diameter 0.837", free length 24", and a spring rate of 0.95 lbs./inch; and the physical characteristics of spring 322 are: wire diameter 0.065", inside diameter 0.544 ", outside diameter 0.654", free length 16", and a spring rate of 1.8 lbs./inch; and the physical characteristics of spring 324 are: wire diameter 0.081", inside diameter 0.362", outside diameter 0.525", free length 10", and a spring rate of 3.37 lbs./inch. The spring rates of each of the three individual springs is illustrated as $CS_1$, $CS_2$ and $CS_3$. As can be appreciated, the spring rates of the three springs could be such that lower spring 320 has the largest spring rate and lower spring 322 has the second largest spring rate. As can also be appreciated, the spring rates of the three springs could be such that lower spring 322 has the largest spring rate and lower spring 324 has the second largest spring rate. As can further be appreciated, the spring rates of the three springs could be such that lower spring 324 has the largest spring rate and lower spring 320 has the second largest spring rate. As can be appreciated, other combinations can be used with respect to size of springs, diameter of springs, and/or spring rate. Indeed, lower spring 324 can be designed to have the largest inner diameter and lower spring 320 has the smallest outside diameter. Lower springs 320 and 322 are oppositely wound in internal chamber 252. In addition, lower springs 322 and 324 are oppositely wound in internal chamber 252. As can be appreciated, this is not required. When the lower springs are oppositely wound with respect to one another, this winding interrelationship together with the dimensional characteristics of the springs produces the combined linear load versus deflection graph as illustrated by the slope of lines $CS_1 + CS_2$ and $CS_1 + CS_2 + CS_3$. A generally linear slope will also be formed when the lower springs are not oppositely wound.

Referring now to FIGURE 11, another configuration of the a spring system of the present invention is illustrated. As shown in FIGURE 11, spring system 400 has an axis A and includes a spring rod 430 which is axially extendable and retractable relative to a one-piece tubular housing 450. The housing includes an internal chamber 452 having an inner surface 454, and a mount end 456 and an opposite end 460. Spring rod 430 includes an outer surface 436, an outer end 432, and an inner end 434. Inner end 434 is connected to guide member 530 by a screw 442 which can be threaded or otherwise connected to inner end 434.

A first lower spring 520 and a second lower spring 522 are located in internal chamber 452. The two lower springs are oriented such that second lower spring 522 is surrounded by first lower spring 520. The interior surface 454 of internal chamber 452 supports the two lower springs to inhibit or prevent the lower springs from buckling during the compression and expansion of the lower springs.

Positioned at mounting end 456 of housing 450 is a tail bushing 470. Tail bushing 470 includes a spring surface 474 and a lock groove 472. The two lower springs 520 and 522 are axially captured between the spring surface 474 of tail bushing 470 and a guide member 530. Tail bushing 470 is supported in internal chamber 452 of housing 450 by a crimp 458 on the mount end which forms a radially inwardly crimp that engages the lock groove 472. Tail bushing 470 is made of a resilient material to withstand the compressive forces of the two lower springs. The tail bushing can also be made of a material that forms a seal in the mount end of the housing to inhibit or prevent fluid from entering or exiting the internal chamber; however, this is not required. As can be appreciated, the tail bushing can include one or more seals, not shown, to facilitate in sealing the mount end of the housing.

An first upper spring 540 and a second upper spring 542 are also located in internal chamber 452. The two upper springs are axially captured between guide member 530 and a top bushing 480. The two upper springs are positioned about spring rod 430. The spring rod facilitates in inhibiting the buckling of the two upper springs during compression of the upper spring.

Spring system 400 typically includes the use of a one-piece housing 450 so as to facilitate in the smooth movement of rod 430 and springs 520, 522, 540 and 542 during operation of the spring system; however, this is not required. Although not shown, tail bushing 470 can include a neck portion having a diameter sized to be received in the interior of spring 522. This neck portion can be used to facilitate in positioning spring 522 relative to spring 520. Similarly, although not shown, top bushing 480 can include a neck portion having a diameter sized to be received in the interior of spring 542. This neck portion can be used to facilitate in positioning spring 542 relative to spring 540.

Connected to tail bushing 470 is a mounting element 500. The mounted element can be formed as part of the tail bushing or be connected to the tail bushing such as by a threaded screw connection or other type of connection.

Positioned in the open end of outer end 460 of housing 450 is a top bushing 480 having a central opening 482. The central opening is sized to allow spring rod 430 to pass therethrough. Top bushing 480 includes a locking groove 484 that is used to secure top bushing 480 to housing 450. Outer end 460 of housing 450 includes a crimp 462 that forms a radially inwardly crimp which engages the locking groove 482. Spring rod 430 is slidably supported at outer end 460 of housing 450 by top bushing 480 as the spring rod passes through opening 482. The top bushing, in conjunction with rod guide member 530, facilitates in guiding the movement of the spring rod in internal chamber 452 thereby inhibiting and/or preventing side loading of the four springs. Top bushing 480 can include a sealing ring to inhibit or prevent a fluid such as a gas or liquid from flowing between inner surface 454 of internal chamber 452 and the outer surface of top bushing 480; however, the use of a sealing ring is not required. Top bushing 480 can also include a rod seal to inhibit or prevent a fluid from flowing between outer surface 436 of spring rod 430 and opening 482 in top bushing 480; however, the use of a rod seal is not required.

Connected to rod end 432 of spring rod 430 is a mounting element 510. Mounting element 510 can be connected to rod end 432 in a variety of ways (e.g., threaded connection, welded connection, etc.). Mounting elements 500 and 510 have openings 504 and 514 therethrough, respectively, for receiving a variety of different mounting components common in the industry including, but not limited to, pins, bolts, screws, hooks, rings, swivels, and the like. As can be appreciated, one or both of the mounting elements can be designed to be removable so as to be replaced with other types of mounting elements so as to modify the assembly for use in a variety of structural environments; however, this is not required.

Guide member 530 is mounted to spring rod 430 and is slidably positioned in internal chamber 452 of housing 450 as spring rod 430 moves relative to housing 450. Guide member 530 is made of suitable material to facilitate such sliding movement. Lubrication can be provided in internal chamber 452 to facilitate in the sliding movement of guide member 530. As will be appreciated from the foregoing description, guide member 530 and top bushing 480 guide support rod 430 for reciprocation in internal chamber 452 of housing 450 so as to maintain minimal breakaway forces for rod 430. Additionally, guide member 530 and top bushing 480 facilitate in maintaining spring rod 430 coaxial with axis A and decrease the effect of side loading on the springs.

The operation of the spring system will now be described. Spring system 400 can be used to assist in the opening and closing a wide variety of structures. As shown in FIGURE 11, spring system 400 is illustrated as being in a partially extended or retracted position. In this position, the guide member is engaged with lower spring 520 which is applying an upward force on the guide member and upper spring 540 which is applying a downward force on the guide member. In this position, springs 520 and 540 can be selected to maintain a generally balanced force on the guide member; however, it can be appreciated that springs 520 and 540 can be selected to form a non-balanced force on the guide member if such arrangement is advantageous for a particular application. Upper spring 542 is shown as maintaining contact with top bushing 480. As can be appreciated, upper spring can be alternatively connected to the top surface of the guide member or be allowed to move between the top bushing and guide member when the upper spring is in an uncompressed state. When the guide member moves upwardly in the housing chamber toward top bushing 480, the guide member eventually engages spring 542. As the guide member continues to move toward the top bushing 480, upper springs 540, 542 are compressed between guide member 530 and top bushing 480. Likewise, when the guide member moves downwardly from the position shown in FIGURE 11, the guide member eventually engages spring 522. As the guide member continues to move downwardly toward tail bushing 470 the first and second lower springs 520 and 522 are in a compressed state and exert a countering upward force on guide member 530.

As illustrated above, spring system 400 has a non-linear load versus deflection curve that occurs in both the extended and retracted positions, thus can be effectively used in situations wherein the force being applied on the spring system in the extended and retracted position is not generally linear. During the compression of the first lower spring 520, the counter force exerted by the spring increases generally linearly. When the guide member moves downwardly in the internal chamber and contacts the second lower spring 522, the second lower spring also begins exerting a counter force on the guide member that increases linearly as the guide member continues to move toward the tail bushing. The additive forces of the two lower springs results in a non-linear load versus deflection curve. Likewise, when the guide member moves upwardly in the internal chamber and contacts the second upper spring 542, the second lower spring also begins exerting a counter force on the guide member that increase linearly as the guide member continues to move toward the top bushing. The additive forces of the two upper springs results in a non-linear load versus deflection curve.

The spring system, through the multiple spring rate characteristics of springs 520, 522, 540 and 542, serves to provide smooth extension forces to the movement of spring rod 430 from a retracted or nonextended position to an extended position. Depending upon the application, the appropriate load versus deflection for the spring system can be determined and the corresponding physical and elastic properties of the combination of the springs can then be ascertained. The springs can each be fabricated from spring material, such as music wire, and, for example, ASTM A228 or 302 stainless steel. As can be appreciated, other metals, plastic materials and/or composite materials could also be used in certain applications.

Springs 520, 522, 540 and/or 542 can have the same or different stress and strain characteristics. If the two springs on each side of the guide member are considered to be a one-dimensional object, the only stress on the springs will be extensional (or compressional, which will be the negative of extensional) and the units of stress will be force per unit of extension. Within a range of compression, each spring obeys "Hook's Law", as described above.

As shown in FIGURE 11, spring 520 has a free length which is greater than the free length of spring 522, and spring 522 has an outer diameter that is smaller than that of spring 520. The wire diameter of spring 522 is greater than that of spring 520, and the spring rate of spring 522 is greater than that of spring 520. Spring 540 has a free length which is greater than the free length of spring 542, and spring 542 has an outer diameter that is smaller than that of spring 540. The wire diameter of spring 542 is greater than that of spring 540, and the spring rate of spring 542 is greater than that of spring 540. As can be appreciated, other combinations can be used with respect to size of springs, diameter of springs, and/or spring rate. Lower springs 520 and 522 and upper springs 540 and 542 are oppositely wound in internal chamber 452; however, this is not required. When the lower springs are oppositely wound, this winding interrelationship together with the dimensional characteristics of the springs produces the combined linear load versus deflection. A generally linear slope will also be formed when the springs are not oppositely wound The different free lengths of springs 520 and 522 and springs 540 and 542 is one component that helps to control the forces and stabilize the rod guide member 530 and spring rod 430 during displacement of the spring rod in the internal chamber.

Referring now to FIGURE 12, another configuration of the a spring system of the present invention is illustrated. As shown in FIGURE 12, the spring system 600 has an axis A and includes a spring rod 630 which is axially extendable and retractable relative to a one-piece tubular housing 650. The housing includes an internal chamber 652 having an inner surface 654, and a mount end 656 and an opposite end 660. Spring rod 630 includes an outer surface 636, an outer end, not shown, and an inner end 634 having a threaded end 638. Inner end 634 is connected to guide member 730 by a nut 642 which is threaded on threaded end 638.

A first spring 720 and a second spring 722 are located in internal chamber 652. The two springs are oriented such that second spring 722 is surrounded by first spring 720. The interior surface 654 of internal chamber 652 supports the two springs to inhibit or prevent the springs from buckling during the compression and expansion of the springs.

Housing 650 includes a mounting end 656 and an opposite end 660. Positioned at mounting end 656 is a tail bushing 670. Tail bushing 670 includes a spring surface 674. The two springs 720 and 722 are axially captured between the spring surface 674 of tail bushing 670 and guide member 730. Tail bushing 670 is supported in internal chamber 652 of housing 650 by bending the endmost portion of the mount end radially inwardly to define a retaining flange 658. Tail bushing 670 is made of a resilient material to withstand the compressive forces of the springs. The tail bushing also can include a material that forms a seal in the mount end of the housing to inhibit or prevent fluid from entering or exiting the internal chamber. As can be appreciated, the tail bushing can include one or more seals, not shown, to facilitate in sealing the mount end of the housing.

Spring system 600 includes the use of a one-piece housing 650 which facilitates in smooth movement of rod 630 and springs 720 and 722 during operation of the spring system. Although not shown, tail bushing 670 can include a neck portion having a diameter sized to be received in the interior of spring 722. This neck portion can be used to facilitate in positioning spring 722 relative to spring 720. Tail bushing 670 is connected to a mounting element 700.

Positioned in the open end of outer end 660 of housing 650 is a top bushing 680 having a central opening 682. The central opening is sized to allow spring rod 630 to pass therethrough. Top bushing 680 includes a locking groove 684 that is used to secure top bushing 680 to housing 650. Outer end 660 of housing 650 includes a crimp 662 that forms a radially inwardly crimp which engages the locking groove 684. Spring rod 630 is slidably supported at end 660 of housing 650 by top bushing 680 by passing through an opening 682. The top bushing, in conjunction with rod guide member 730, facilitates in guiding the movement of the spring rod in internal chamber 652 thereby inhibiting and/or preventing side loading of the springs. Top bushing 680 includes an outer groove 686 that receives a sealing ring 690. Sealing ring 690 inhibits or prevents a fluid such as a gas from flowing between inner surface 654 of internal chamber 652 and the outer surface of top bushing 680. Bushing 680 also includes a lower central cavity 688 which receives a rod seal 692. Rod seal 692 inhibits or prevents a fluid such as a gas from flowing between outer surface 636 of spring rod 630 and opening 682 in top bushing 680. Seals 690 and 692 are designed to seal end 660 of housing 650 from fluid flow into or out of internal chamber 652 during the use of spring system 600.

A damping spring, not shown, can also be positioned about spring rod 630 in the upper sub-chamber. The damping spring is designed to begin compression as the guide member 730 approaches top bushing 680. The damping spring can be used to protect the guide member from damage due to rapid and hard contact with the top bushing as the spring rod moves to the fully extended position and/or can function to further slow the extension of the spring rod as it nears the fully extended position. As can further be appreciated, a dual spring arrangement could be positioned in the upper sub-chamber to further modify the rate of movement of the spring rod between an extended and non-extended position.

The rod end of spring rod 630 can include or be connected to a mounting element, not shown. Mounting elements 700 and the mounting element on the rod end can have openings 704 therethrough for receiving a variety of different mounting components common in the industry including, but not limited to, pins, bolts, screws, hooks, rings, swivels, and the like. As can be appreciated, one or both of the mounting elements can be designed to be removable so as to be replaced with other types of mounting elements so as to modify the assembly for use in a variety of structural environments; however, this is not required.

Guide member 730 is mounted to spring rod 630 and is slidably positioned in internal chamber 652 of housing 650 as spring rod 630 moves relative to housing 650. Guide member 730 is made of suitable material to facilitate such sliding movement. Lubrication can be provided in internal chamber 652 to facilitate in the sliding movement of guide member 730. As will be appreciated from the foregoing description, guide member 730 and top bushing 680 guide support rod 630 for reciprocation in internal chamber 652 of housing 650 so as to maintain minimal breakaway forces for rod 630. Additionally, guide member 730 and top bushing 680 facilitate in maintaining spring rod 630 coaxial with axis A and decrease the effect of side loading on the springs.

As described above, tail bushing 670 and top bushing 680 form a seal at each end of housing 650 to inhibit or prevent fluid from entering or escaping from internal chamber 652 when the spring rod reciprocates in the internal chamber or remains in a stationary position. The rod guide member includes valving, that will be described below, which regulates the flow of fluid in the internal chamber of the housing so as to control the rate at which the spring rod moves from a non-extended to extended position. Rod guide member 730 includes an annular slot 732 designed to receive a seal 760. Seal 760 is design to inhibit or prevent fluid from passing between inner surface 654 of internal chamber 652 and the outer surface 734 of rod guide 730. As such, the rod guide member resembles a plunger in that it divides internal chamber 654 into a lower sub-chamber 750 between rod guide member 730 and tail bushing 670 and an upper sub-chamber 752 between top bushing 680 and rod guide member 730. Rod guide member includes three openings passing longitudinally through the rod guide member. A central opening 736 is designed to receive threaded end 638 of spring rod 630. As stated above, the threaded end passes through the central opening of the rod guide member and nut 642 is then threaded thereon to connect the rod guide member to the spring rod. The rod guide member also includes two fluid openings 738 and 740. Fluid opening 738 is shown to have a smaller diameter than fluid opening 740; however, this is not required. The smaller diameter of fluid opening 738 results in a lower maximum fluid flow rate through the opening than the maximum fluid flow rate of fluid opening 740. Fluid opening 740 includes a valve recess 742 that is designed to receive a valve 770 and a valve seal 772. A guide cover 780 in positioned over the top surface of guide member 730 to maintain valve 770 in valve recess 742. The guide cover can be secured to the rod guide member in a number of ways (e.g., adhesive, melting. etc.). The guide cover includes three openings 782, 784 and 786 that are axially aligned to fluid opening 740, central opening 736 and fluid opening 738.

The operation of the of guide member in the during the reciprocation of the spring rod will now be described. The downward arrow indicates the movement of the spring rod into a non-extended position. As the spring rod moves in the direction of the arrow, the rod guide member is moved toward tail bushing 670 in the internal chamber thereby resulting in the compression of springs 720 and 722. As stated above, the spring system, through the multiple spring rate characteristics of springs 720 and 722, serves to provide smooth extension forces to the movement of spring rod 630 from a retracted or nonextended position to an extended position thereof relative to housing 650. Depending upon the application, the appropriate load versus deflection for the spring system can be determined and the corresponding physical and elastic properties of the combination of springs 720 and 722 can then be ascertained. The springs 720 and 722 can each be fabricated from spring material, such as music wire, and, for example, ASTM A228 or 302 stainless steel. As can be appreciated, other metals, plastic materials and/or composite materials could also be used in certain applications.

The springs can have the same or different stress and strain characteristics. If the two springs on each side of the guide member are considered to be a one-dimensional object, the only stress on the springs will be extensional (or compressional, which will be the negative of extensional) and the units of stress will be force per unit of extension. Within a range of compression, each spring obeys "Hook's Law", as described above.

Spring 720 has a free length which is greater than the free length of spring 722, and spring 722 has an outer diameter that is smaller than that of spring 720. Also, the wire diameter of spring 722 is less than that of spring 720, and the spring rate of spring 722 is less than that of spring 720. As can be appreciated, the wire diameter and/or the outer diameter of spring 722 can be larger than spring 720. As an example of one particular application, the specific physical characteristics of spring 722 are: wire diameter 0.055", inside diameter 0 .544", outside diameter 0.654", free length 13", and a spring rate of 0.95 lbs./inch; and the physical characteristics of spring 120 are: wire diameter 0.081 ", inside diameter 0.675", outside diameter 0.837", free length 18", and a spring rate of 3.37 lbs./inch. Springs 720 and 722 are oppositely wound in internal chamber 652 and that this winding interrelationship together with the dimensional characteristics of the springs produces the combined desired non-linear load versus deflection graph.

As shown in FIGURE 12, the fluid, such as air or oil, in the lower sub-chamber 750 flows through rod guide member 730 via fluid openings 738 and 740 as the rod guide member moves toward tail bushing 670. Valve 770 is designed and oriented in valve recess 742 to move off of valve seal 772 by fluid pressure as the fluid moves from the lower sub-chamber 750, through fluid opening 740 and into upper sub-chamber 752. Tail bushing 670 inhibits or prevents fluid from flowing out through mount end 656 of housing 650 thus requiring fluid in lower sub-chamber 750 to flow into upper sub-chamber 752 as the pressure increases in the lower sub-chamber due to the movement of the rod guide member. Seal 760 about the outer surface of the rod guide member inhibit or prevents fluid from flowing between outer surface 734 of rod guide member 730 and inner surface 654 of internal chamber 652. Nut 642 that is threaded on threaded end 638 of spring rod 630 also inhibits or prevents fluid from flowing through central opening 736 of rod guide member 730. As such, essentially all the fluid flowing from lower sub-chamber 750 to upper sub-chamber 752 flows through fluid openings 738 and 740 of rod guide member 730 as indicated by the arrows. The open position of valve 770 results in the rod guide member not significantly altering or controlling the rate of movement of the rod guide member toward tail bushing 670 as a force is being applied to end 632 of spring rod 630. The two springs 720 and 722 and the degree of force being applied to end 632 of spring rod 630 are the principle factors that determine the rate at which the rod guide member moves toward tail bushing 670. As can be appreciated, the size of fluid openings 738 and 740 can be selected to alter the rate of movement of the rod guide member toward tail bushing 670 as a force is being applied to end 632 of spring rod 630. A lubricant is typically applied to the inner surface of internal chamber 652, when the fluid is a gas, to facilitate in the movement of the rod guide member in the internal chamber. The lubricant can also have a sealing effect to inhibit fluid flow between outer surface 734 of rod guide member 730 and inner surface 654 of internal chamber 652.

When the movement of the rod guide member is away from tail bushing 670 and toward top bushing 680, this movement of the rod guide member represents the spring rod moving toward an extended position. As the rod guide member moves toward top bushing 680, the size of upper sub-chamber decreases and the fluid pressure within the upper sub-chamber increases. Seal ring 690 and rod seal 692 inhibit or prevent fluid from flowing out of upper sub-chamber 752 through end 660 of housing 650. In addition, seal 760 positioned on the outer surface of rod guide member 730 inhibits or prevents fluid from flowing between outer surface 734 of rod guide member 730 and inner surface 654 of internal chamber 652. As such, the compressed fluid in upper sub-chamber 752 attempts to flow through fluid openings 738 and 740 of rod guide member 730. Valve 770 is designed such that as fluid begins to flow from the upper sub-chamber through fluid opening 740, the fluid flow causes valve 770 to engage valve seal 772 thereby inhibiting or preventing fluid flow through fluid opening 740. The closure of valve 770 results in the fluid in upper sub-chamber 752 to flow into lower sub-chamber 750 via fluid opening 738. Fluid opening 738 allows fluid to freely flow through the opening into lower sub-chamber 750. The diameter of fluid opening 738 is selected to allow for a certain fluid flow rate. The selected fluid flow rate results in a pressure buildup in upper sub-chamber 752 as the rod guide member moves toward top bushing 680. An initial rapid movement of the rod guide member toward top bushing 680 will result in a rapid pressure increase in upper sub-chamber 752. The size of fluid opening 738 is selected so as to allow for this high pressure build up and slower pressure release, thereby resulting in the high pressure in the upper sub-chamber exerting a countering force to the springs and resulting in a slower movement of the rod guide member toward top bushing 680. The slower movement of the rod guide member to toward top bushing 680 results in a slower movement of the spring rod to an extended position. The size of fluid opening 738 is selected to thereby control the rate of movement of the spring rod from a nonextended to an extended position. In essence, the bleed rate of the fluid through fluid opening 738 at least partially controls the rate extension of the spring rod 630. As can be appreciated, fluid opening can include a valve arrangement to regulate fluid flow through the fluid opening. It can also or alternatively be appreciated that fluid opening 740 can be absent a valve arrangement and the size of the two fluid openings are used to control the rate of movement of the spring rod in the internal chamber. In this arrangement or other arrangements, it can be appreciated that a single fluid opening or three or more fluid openings can be used in the rod guide member.

Referring again to FIGURE 12, housing 650 is showing to include an opening 754 that is designed to allow a fluid such as air to enter and exit the upper sub-chamber 752. In this particular configuration, the openings and the valve system in the guide member 730 can be eliminate, modified or be used in conjunction with the opening 754. In one non-limiting configuration, guide member 730 can be modified by eliminating fluid opening 738. The guide cover is also modified to eliminate opening 786 that corresponds to fluid opening 738. In operation, valve 770 is in an open position as the spring rod moves to a nonextended position as indicated by the arrow. As explained above, as the fluid pressure increases due to the decrease in size of lower sub-chamber 750 caused by the movement of rod guide member 730 toward tail bushing 670, the increased fluid pressure causes valve 770 to be lifted off of valve seal 772 thereby allowing fluid to flow from the lower sub-chamber to the upper sub-chamber as indicated by the arrows. The size of fluid opening 740 is typically selected to allow a sufficient fluid flow rate so as not to impair the movement of the rod guide member toward the tail bushing. As can be appreciated, the size of the fluid opening can be selected to at least partially control the rate at which the rod guide member can move toward the tail bushing. As fluid flows from lower sub-chamber into upper sub-chamber, some fluid may exit through opening 754 and/or fluid may enter into upper sub-chamber through the opening 754. When the spring rod is moving to an extended position, the rod guide member moves toward top bushing 680 and the size of upper sub-chamber 752 decreases thereby resulting in a fluid pressure increase in the upper sub-chamber. The pressure increase causes valve 770 to move toward valve seal 772 thereby inhibiting or preventing fluid flow through fluid opening 740. As a result, the pressurized fluid is forced out of upper sub-chamber 752 through opening 754. The size of opening 754 can be selected to thereby control the rate of movement of the spring rod from a nonextended to an extended position. As can be appreciated, opening 754 can include a valve arrangement to regulate fluid flow through the opening. It can also or alternatively be appreciated that fluid opening 740 can be absent a valve arrangement and the size of the fluid opening and the annular opening are used to control the rate of movement of the spring rod in the internal chamber. As can also be appreciated, opening 754 can be eliminated and an opening into the upper sub-chamber can be formed by removing seal 692.

While considerable emphasis has been placed herein on the structures and configurations of the preferred embodiments of the invention, it will be appreciated that other embodiments, as well as modifications of the embodiments disclosed herein, can be made without departing from the principles of the invention. In this respect, it will be appreciated that the spring rod can be used in applications other than those disclosed herein. Similarly, multiple combinations of coaxial and surrounding springs (i.e. three, four, etc.) may be configured to meet the desired load versus deflection for a particular application. Likewise, it will be appreciated that a spring rod according to the invention can be secured to relatively displaceable components in any number of different ways. These and other modifications of the preferred embodiments, as well as other embodiments of the invention, will be obvious and suggested to those skilled in the art from the disclosure herein, whereby it is to be distinctly understood that the foregoing descriptive matter is to be interpreted merely as illustrative of the present invention and not as a limitation thereof.

## Claims

1. A spring system comprising a housing having an axis, an internal chamber, and axially opposite bottom and top ends, a rod member coaxial with said axis and positioned within said internal chamber and having an inner end in said housing and an outer end axially outwardly of said top end, a guide member on said inner end of said rod member supporting said rod member for reciprocation axially of said housing between retracted and extended positions relative thereto, and first and second springs each extending between said guide member and the bottom end of said housing, said first and second springs being coaxial with one another and with said axis, said guide member dividing said internal chamber into at least two sub-chambers, said first and second springs being positioned in the same sub-chamber, said first and second springs having a non-linear load versus deflection curve as the rod member moves between an extended position and a retracted position.

2. The spring system as defined in claim 1, wherein said first and second springs have different longitudinal lengths and are compressed for different periods of time as the rod member moves from an extended position to a retracted position.

3. The spring system as defined in claim 1 or 2, wherein the direction of winding of said first spring is opposite to the direction of winding of said second spring.

4. The spring system as defined in anyone of the claims 1 to 3 and in particular in claims 1 and 3, wherein the outside diameter of said first spring is less than the outside diameter of said second spring.

5. The spring system as defined in anyone of the claims 1 to 4 and in particular in claims 1 and 4, wherein the wire diameter of said first spring is less than the wire diameter of said second spring.

6. The spring system as defined in anyone of the claims 1 to 5 and in particular in claims 1 and 5, including a bushing at said top end to support said rod for reciprocation axially of said housing between retracted and extended positions relative thereto.

7. The spring system as defined in anyone of the claims 1 to 6 and in particular in claims 1 and 6, including a guide rod that extends from said guide member toward said bottom end and coaxial with said axis.

8. The spring system as defined in anyone of the claims 1 to 7 and in particular in claims 1 and 7, including at least a third spring positioned in the same sub-chamber as said first and second springs, said third spring having a longitudinal length that is different from said first and second spring and said third spring is compressed for different periods of time from said first and second springs as the rod member moves from an extended position to a retracted position.

9. The spring system as defined in 8, wherein an outside diameter of said third spring is different from an outside diameter of said first spring, second spring or combinations thereof.

10. The spring system as defined in 8 or 9, wherein a thickness of said third spring is different from a thickness of said first spring, second spring or combinations thereof.

11. The spring system as defined in anyone of the claims 1 to 10 and in particular in claims 1, 7 and 10, including at least one counter spring being coaxial with said axis and positioned in a sub-chamber that is different from the sub-chamber containing said first and second springs.

12. The spring system as defined in claim 11, including a first and second counter spring, both counter springs being coaxial with said axis and positioned in a sub-chamber that is different from the sub-chamber containing said first and second springs, said first and second counter springs having a non-linear load versus deflection curve non-linear as the rod member moves between an extended position and a retracted position.

13. The spring system as defined in claim 11 or 12, wherein said guide member includes at least one fluid passageway that at least partially regulates fluid flow between said at least two sub-chambers during said reciprocation of said rod member.

14. The spring system as defined in claim 13, wherein at least one fluid passageway includes a valve arrangement.

15. The spring system as defined in claim 13, wherein said top and bottom ends are sealed to substantially prevent fluid flow through said top and bottom ends.

16. The spring system as defined in anyone of the claims 1 to 14 and in particular in claims 1, 13 or 14, wherein said top end includes a passageway to allow for a controlled rate of fluid flow to exit said internal chamber as said rod member moves to said extended position.

17. A method of controlling the rate of extension and retraction of a spring rod of a spring system comprising:

providing a housing having a longitudinal axis, an internal chamber, and axially opposite bottom and top ends, said spring rod coaxial with said axis and positioned within said internal chamber, said spring rod having an inner end in said housing and an outer end axially outwardly of said top end;
providing a guide member positioned on said inner end of said spring rod, said guide member supporting said rod member for reciprocation axially in said housing between a retracted and an extended position relative thereto, said guide member dividing said internal chamber into at least upper and lower sub-chambers;
providing first and second springs each extending between said guide member and the bottom opposite end of said housing, said first and second springs being coaxial with one another and with said axis; and,
creating a non-linear load versus deflection curve of said first and second springs as the rod member moves between an extended position and a retracted position.

18. The method as defined in claim 17, wherein said first and second springs have different longitudinal lengths and are compressed for different periods of time as the rod member moves from an extended position to a retracted position.

19. The method as defined in claim 17 or 18, wherein the direction of winding of said first spring is opposite to the direction of winding of said second spring.

20. The method as defined in claim 17, 18 or 19, wherein the outside diameter of said first spring is less than the outside diameter of said second spring.

21. The method as defined in anyone of the claims 17 to 20 and in particular in claim 19, wherein the wire diameter of said first spring is less than the wire diameter of said second spring.

22. The method as defined in anyone of the claims 17 to 21, including the step of providing a bushing at said top end to support said rod for reciprocation axially of said housing between retracted and extended positions relative thereto.

23. The method as defined in anyone of the claims 17 to 22, including the step of providing a guide rod that extends from said guide member toward said bottom end and coaxial with said axis.

24. The method as defined in anyone of the claims 17 to 23 and in particular in claim 19, including the step of providing at least a third spring positioned in the same sub-chamber as said first and second springs, said third spring having a longitudinal length that is different from said first and second spring and said third spring is compressed for different periods of time from said first and second springs as the rod member moves from an extended position to a retracted position.

25. The method as defined in 24, wherein an outside diameter of said third spring is different from an outside diameter of said first spring, second spring or combinations thereof.

26. The method as defined in 24 or 25, wherein a thickness of said third spring is different from a thickness of said first spring, second spring or combinations thereof.

27. The method as defined in anyone of the claims 17 to 26 and in particular in claims 17, 19 or 24, including the step of providing at least one counter spring being coaxial with said axis and positioned in a sub-chamber that is different from the sub-chamber containing said first and second springs.

28. The method as defined in claim 27, including the step of providing a first and second counter spring, both counter springs being coaxial with said axis and positioned in a sub-chamber that is different from the sub-chamber containing said first and second springs, said first and second counter springs having a non-linear load versus deflection curve as the rod member moves between an extended position and a retracted position.

29. The method as defined in anyone of the claims 17 to 28 and in particular in claims 17, 19 or 28, including the step of at least partially controlling the rate of extension of said spring rod by at least partially regulating a fluid flow rate between said sub-chambers.

30. The method as defined in claim 29, wherein said step of at least partially regulating a fluid flow rate includes at least one fluid passageway that at least partially regulates fluid flow between said at least two sub-chambers during said reciprocation of said rod member.

31. The method as defined in claim 30, wherein at least one fluid passageway includes a valve arrangement.

32. The method as defined in anyone of the claims 29 to 31, wherein said top and bottom ends are sealed to substantially prevent fluid flow through said bottom and top ends.

33. The method as defined in anyone of the claims 17 to 32 and in particular in claims 19, 29 , 30 or 31, wherein said top end includes a passageway to allow for a controlled rate of fluid flow to exit said internal chamber as said rod member moves to said extended position.

FIG. 1

FIG. 2

FIG. 3

FIG. 4

FIG. 5

FIG. 6

FIG. 7

FIG. IO

FIG. 8

FIG. 9

FIG. 11

FIG. 12

European Patent Office

**EUROPEAN SEARCH REPORT**

Application Number

EP 05 01 5401

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 360 123 A (JOHNSTON ET AL) 1 November 1994 (1994-11-01)<br><br>* column 7, line 37 - column 8, line 2; figures 16-19,22 * | 1,2, 4-12,17, 18,20-28 | F16F3/04 |
| Y | | 3,13-16, 19,29-33 | |
| D,Y | WO 03/064212 A (BARNES GROUP INC; ADOLINE, JACK, W; FISCHER, THOMAS, J) 7 August 2003 (2003-08-07) * the whole document * | 3,13-16, 19,29-33 | |
| X | DE 39 39 118 A1 (STABILUS GMBH, 5400 KOBLENZ, DE; STABILUS GMBH, 56070 KOBLENZ, DE) 29 May 1991 (1991-05-29)<br><br>* the whole document * | 1-6, 8-10, 17-22, 24-26, 29-32 | |
| X | PATENT ABSTRACTS OF JAPAN vol. 006, no. 134 (M-144), 21 July 1982 (1982-07-21) -& JP 57 057934 A (NHK SPRING CO LTD), 7 April 1982 (1982-04-07) * abstract; figures * | 1-4,6, 11, 17-20, 22,27 | TECHNICAL FIELDS SEARCHED (IPC)<br><br>F16F<br>E05F |
| X | US 2 783 039 A (WILSON JOHN O) 26 February 1957 (1957-02-26) * the whole document * | 1 | |
| A | DE 201 12 112 U1 (HOFMANN, CHRISTA) 31 October 2001 (2001-10-31) * abstract * | 1 | |
| A | US 2004/113341 A1 (MCCONNELL PHILLIP A ET AL) 17 June 2004 (2004-06-17) * figures 1-3,9,10 * | 1-33 | |

-/--

The present search report has been drawn up for all claims

| Place of search | Date of completion of the search | Examiner |
|---|---|---|
| Munich | 22 November 2005 | Pirog, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

EUROPEAN SEARCH REPORT

Application Number

EP 05 01 5401

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 23 08 343 A1 (HASSE,FRIEDRICH W.,DIPL.-ING) 22 August 1974 (1974-08-22) * figure 8 * ----- | 8-10, 24-26 | |

TECHNICAL FIELDS SEARCHED (IPC)

The present search report has been drawn up for all claims

| Place of search | Date of completion of the search | Examiner |
|---|---|---|
| Munich | 22 November 2005 | Pirog, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 05 01 5401

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2005

| Patent document cited in search report | | Publication date | Patent family member(s) | | Publication date |
|---|---|---|---|---|---|
| US 5360123 | A | 01-11-1994 | NONE | | |
| WO 03064212 | A | 07-08-2003 | BR | 0215559 A | 21-12-2004 |
| | | | BR | 0307287 A | 28-12-2004 |
| | | | CA | 2472622 A1 | 07-08-2003 |
| | | | CA | 2473237 A1 | 07-08-2003 |
| | | | EP | 1470345 A1 | 27-10-2004 |
| | | | EP | 1470009 A2 | 27-10-2004 |
| | | | HU | 0402559 A2 | 28-04-2005 |
| | | | JP | 2005516162 T | 02-06-2005 |
| | | | JP | 2005516166 T | 02-06-2005 |
| | | | NZ | 534477 A | 29-07-2005 |
| | | | NZ | 534505 A | 24-03-2005 |
| | | | WO | 03064884 A1 | 07-08-2003 |
| | | | US | 2003141641 A1 | 31-07-2003 |
| | | | US | 2004207136 A1 | 21-10-2004 |
| | | | US | 2004207137 A1 | 21-10-2004 |
| DE 3939118 | A1 | 29-05-1991 | ES | 2028560 A6 | 01-07-1992 |
| JP 57057934 | A | 07-04-1982 | JP | 1431238 C | 24-03-1988 |
| | | | JP | 62038573 B | 18-08-1987 |
| US 2783039 | A | 26-02-1957 | NONE | | |
| DE 20112112 | U1 | 31-10-2001 | NONE | | |
| US 2004113341 | A1 | 17-06-2004 | AU | 2003293515 A1 | 30-06-2004 |
| | | | WO | 2004053351 A2 | 24-06-2004 |
| DE 2308343 | A1 | 22-08-1974 | NONE | | |

EPO FORM P0459

For more details about this annex : see Official Journal of the European Patent Office, No. 12/82